(19) Europäisches Patentamt
European Patent Office
Office européen des brevets

(11) Veröffentlichungsnummer : **0 313 604 B1**

(12) # EUROPÄISCHE PATENTSCHRIFT

(45) Veröffentlichungstag der Patentschrift :
**25.03.92 Patentblatt 92/13**

(51) Int. Cl.$^5$ : **C09K 19/30,** C09K 19/34

(21) Anmeldenummer : **88903807.1**

(22) Anmeldetag : **21.04.88**

(86) Internationale Anmeldenummer :
**PCT/EP88/00335**

(87) Internationale Veröffentlichungsnummer :
**WO 88/08441 03.11.88 Gazette 88/24**

(54) **ELEKTROOPTISCHES FLÜSSIGKRISTALLANZEIGEELEMENT.**

Die Akte enthält technische Angaben, die nach dem Eingang der Anmeldung eingereicht wurden und die nicht in dieser Patentschrift enthalten sind.

(30) Priorität : **28.04.87 DE 3714043**

(43) Veröffentlichungstag der Anmeldung :
**03.05.89 Patentblatt 89/18**

(45) Bekanntmachung des Hinweises auf die Patenterteilung :
**25.03.92 Patentblatt 92/13**

(84) Benannte Vertragsstaaten :
**DE**

(56) Entgegenhaltungen :
**EP-A- 0 022 183**
**EP-A- 0 087 032**
**EP-A- 0 193 191**
**WO-A-87/05618**
**WO-A-87/06602**
**DE-A- 2 937 911**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **POETSCH, Eike**
**Am Buchwald 4**
**W-6109 Mühltal 6 (DE)**
Erfinder : **KURMEIER, Hans, Adolf**
**Hinter der Schule 3a**
**W-6104 Seeheim-Jugenheim (DE)**
Erfinder : **EIDENSCHINK, Rudolf**
**Konrad-Adenauer-Strasse 1**
**W-6109 Mühltal 1 (DE)**
Erfinder : **WEBER, Georg**
**Wilhelm-Leuschner-Strasse 38**
**W-6106 Erzhausen (DE)**
Erfinder : **WÄCHTLER, Andreas**
**Goethestrasse 34**
**W-6103 Griesheim (DE)**

**EP 0 313 604 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein elektrooptisches Flüssigkristallanzeigeelement enthaltend ein Dielektrikum mit mindestens zwei flüssigkristallinen Komponenten, dadurch gekennzeichnet, daß das Dielektrikum zur Verkürzung der Schaltzeiten mindestens eine fluorhaltige Verbindung der Formel I enthält,

$$R^1\text{-}(A^1\text{-}Z^1)_m\text{-}A^2\text{-}R^2 \qquad I$$

worin

einer der Reste $R^1$ und $R^2$

H, F, Cl, Br, -CN , -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, $-CCH_3CN-$, -C≡C- und -CH=CH- ersetzt sein können, wobei 2 Heteroatome nicht direkt miteinander verknüpft sind,

der andere Rest $R^1$ oder $R^2$

$$-X'\text{-}Q'\text{-}Y'\text{-}R^5$$

worin

X′ -CO-O-, -O-CO, -O-CO-O-, -CO-, -O-, -S-, -CH=CH-,-CH=CH-COO-, $-CH_2CH_2-$, $-CH_2CH_2-COO-$ oder eine Einfachbindung,

Q′ Alkylen mit 1 bis 5 C-Atomen, worin auch eine nicht mit X′ verknüpfte $CH_2$-Gruppe durch -O-, -CO-, -O-CO-, -CO-O- oder -CH=CH- ersetzt sein kann, oder eine Einfachbindung,

Y′ Perfluoralkylen mit 2 bis 15 C-Atomen, worin auch eine oder mehrere $CF_2$ -Gruppen durch -CHF- oder -CF=CF- ersetzt sein können; und

$R^5$ H, F oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können,

bedeutet, mit der Maßgabe, daß die Gruppe der Formel $-X'\text{-}Q'\text{-}Y'\text{-}R^5$ insgesamt nicht mehr als 15 C-Atome und mindestens zwei $CF_2$-Gruppen enthält, und Q′ Alkylen mit 1 bis 5 C-Atomen worin auch eine nicht mit X′ verknüpfte $CH_2$-Gruppe durch --O-, -CO-, -O-CO-, -CO-O-oder - CH=CH - ersetzt sein kann und/oder $R^5$ H oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können, bedeutet,

$A^1$ und $A^2$ jeweils unabhängig voneinander unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O- Atome und/oder S-Atome ersetzt sein können, Piperidin-1,4-diyl, 1,4-Bicyclo[2.2.2]octylen, unsubstituiertes oder durch CN substituiertes Decahydronapthalin-2,6-diyl oder 1,2,3,4-Tetrahydronaphthalin-2,6-diyl, $A^2$ auch eine Einfachbindung,

m 0, 1, 2 oder 3, und

$Z^1$ -CO-O, -O-CO-, $-OCH_2-$, $-CH_2O-$, $-CH_2\text{-}CH_2-$, substituiertes Ethylen oder eine Einfachbindung bedeutet,

wobei für m = 2 oder 3 die Gruppen $A^1$ und $Z^1$ gleich oder voneinander verschieden sein können, mit der Maßgabe, daß im Falle m = O die summe der Zahl der C-Atome in beiden Gruppen $R^1$ und $R^2$ mindestens 8 beträgt und fluorhaltige Additive enthaltende flüssigkristalline Dielektrika, die zur Verkürzung der Schaltzeiten in elektrooptischen Flüssigkristallanzeigeelementen geeignet sind. Die Erfindung betrifft ferner neue Verbindungen der Formel I, die den Formeln II, III und IV entsprechen.

Flüssigkristalline Dielektrika können in verschiedenen elektrooptischen Anzeigeelementen verwendet werden, insbesondere in Displays, die auf dem Prinzip der verdrillten Zelle (TN-Displays), dem Guest-Host-Effekt, dem Effekt der Deformation aufgerichteter Phase, dem Effekt der dynamischen Streuung, dem SBE-Effekt (supertwisted birefringent effect), in STN-Displays (supertwisted nematic displays) und in ferroelektrische Displays z.B. basierend auf der SSFLC-Technologie basieren. Der in dieser Anmeldung verwendete Ausdruck "Dielektrikum" bezieht sich somit auf Mischungen, welche eine nematische, cholesterische oder smektische (insbesondere Sc*) Mesophase aufweisen.

Um für die oben aufgeführten Anzeigeelemente geeignet zu sein, müssen die Dielektrika eine Vielzahl verschiedenster, auf das jeweilige Anzeigeprinzip abgestimmte Forderungen erfüllen, wozu jedoch in praktisch jedem Fall sehr kurze Schaltzeiten gehören, die unter anderem auch durch viskositätserniedrigende Zusätze erreicht werden können. Derartige Zusätze sind bereits in der Literatur beschrieben worden (DE-OS 25 48 360, DE-OS 28 23 909). Nachteile dieser bekannten Zusätze sind jedoch die in Kauf zu nehmende Erniedrigung des Klärpunktes und/oder der hohe Dampfdruck dieser Zusätze. Flüssigkristalline Verbindungen mit perfluorierten Alkylgruppen und ihre Verwendung in Flüssigkristallmischungen sind aus folgenden Dokumenten bekannt: EP-A 22183, EP-A 87032, DE-A 2937911 und W0 87/06602.

Der Erfindung lag die Aufgabe zugrunde, neue stabile Dielektrika mit fluorhaltigen Additiven aufzufinden,

die obige Nachteile nicht oder nur in geringerem Maße aufweisen.

Es wurde nun gefunden, daß sich die Verbindungen der Formel I hervorragend als Additive für verschiedenartige Dielektrika eignen.

Mit der Bereitstellung der Verbindungen der Formel I wird außerdem ganz allgemein die Palette der Additive für flüssigkristalline Dielektrika, die sich unter verschiedenen anwendungstechnischen Gesichtspunkten zur Herstellung flüssigkristalliner Gemische eignen, erheblich verbreitert.

Der Einfachheit halber bedeuten im folgen Phe eine 1,4-Phenylengruppe, Cy eine 1,4-Cyclohexylengruppe, Dio eine 1,3-Dioxan-2,5-diylgruppe, Bi eine Bicyclo(2,2,2)octylengruppe, Pyd eine Pyridin-2,5-diylgruppe und Pyr eine Pyrimidin-2,5-diylgruppe, wobei diese Gruppen unsubstituiert oder substituiert sein können.

Die Verbindungen der Formel I besitzen einen breiten Anwendungsbereich. In Abhängigkeit von der Auswahl der Substituenten können diese Verbindungen flüssigkristallinen Dielektrika aus anderen Verbindungsklassen zugesetzt werden, die für die verschiedensten Anwendungen geeignet sind.

Gegenstand der Erfindung sind somit elektrooptisches Flüssigkristallanzeigeelemente enthaltend ein Dielektrikum mit mindestens zwei flüssigkristallinen Komponenten, dadurch gekennzeichnet, daß das Dielektrikum zur Verkürzung der Schaltzeiten mindestens eine fluorhaltige Verbindung der Formel I enthält,

$$R^1\text{-}(A^1\text{-}Z^1)_m\text{-}A^2\text{-}R^2 \qquad I$$

worin

einer der Reste $R^1$ und $R^2$

H, F, Cl, Br, -CN , -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, $-CCH_3CN-$, -C≡C- und -CH=CH- ersetzt sein können, wobei 2 Heteroatome nicht direkt miteinander verknüpft sind,

der andere Rest $R^1$ und $R^2$

$$-X'\text{-}Q'\text{-}Y'\text{-}R^5$$

worin

X' -CO-O-, -O-CO-, -O-CO-O-, -CO-, -O-, -S-, -CH=CH-, -CH=CH-COO, $-CH_2CH_2-$, $-CH_2CH_2$-COO- oder eine Einfachbindung,

Q' Alkylen mit 1 bis 5 C-Atomen, worin auch eine nicht mit X' verknüpfte $CH_2$-Gruppe durch -O-, -CO-, -O-CO-, -CO-O- oder -CH=CH- ersetzt sein kann, oder eine Einfachbindung,

Y' Perfluoralkylen mit 2 bis 15 C-Atomen, worin auch eine oder mehrere $CF_2$ -Gruppen durch -CHF- oder -CF=CF- ersetzt sein können; und

$R^5$ H, F oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können,

bedeutet, mit der Maßgabe, daß die Gruppe der Formel -X'-Q'-Y'-$R^5$ insgesamt nicht mehr als 15 C-Atome und mindestens zwei $CF_2$-Gruppen enthält, und Q' Alkylen mit 1 bis 5 C-Atomen worin auch eine nicht mit X' verknüpfte $CH_2$-Gruppe durch --O-, -CO-, -O-CO-, -CO-O-oder - CH=CH - ersetzt sein kann und/oder $R^5$ H oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können, bedeutet,

$A^1$ und $A^2$ jeweils unabhängig voneinander unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O- Atome und/oder S-Atome ersetzt sein können, Piperidin-1,4-diyl, 1,4-Bicyclo[2.2.2]octylen, unsubstituiertes oder durch CN substituiertes Decahydronapthalin-2,6-diyl oder 1,2,3,4-Tetrahydronaphthalin-2,6-diyl, $A^2$ auch eine Einfachbindung,

m 0, 1, 2 oder 3, und

$Z^1$ -CO-O, -O-CO-, $-OCH_2-$, $-CH_2O-$, $-CH_2\text{-}CH_2-$, substituiertes Ethylen oder eine Einfachbindung bedeutet,

wobei für m = 2 oder 3 die Gruppen $A^1$ und $Z^1$ gleich oder voneinander verschieden sein können, mit der Maßgabe, daß im Falle m = O die summe der Zahl der C-Atome in beiden Gruppen $R^1$ und $R^2$ mindestens 8 beträgt sowie flüssigkristalline Dielektrika mit mindestens zwei flüssigkristallinen Komponenten, die mindestens eine Verbindung der Formel I enthalten.

Gegenstand der Erfindung ist weiterhin die Verwendung der Verbindungen der Formel I als Komponenten Flüssigkristalliner Dielektrika für elektrooptische Anzeigeelemente, Fluorverbindungen der Formel II

$$R^1\text{-}(A^1\text{-}Z^1)_m\text{-}A^2\text{-}R^2 \qquad II$$

worin

einer der Reste $R^1$ und $R^2$

H, F, Cl, Br, -CN , -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, $-CCH_3CN-$, -C≡C- und -CH=CH- ersetzt sein können, wobei 2 Heteroatome nicht direkt miteinander verknüpft sind,

der andere Rest $R^1$ oder $R^2$

X′ - Q′ - Y′ - $R^5$, worin X′, Q′, Y′ und $R^5$ die bei Formel I angegebene Bedeutung haben,

$A^1$ unsubstituiertes oder durch ein oder zwei F- und/oder Cl-Atome und/oder $CH_3$-Gruppe und/oder CN-Gruppen substituiertes trans-1,4-Cyclohexylen, worin auch eine oder zwei nicht benachbarte $CH_2$-Gruppen durch O und/oder S oder -CH-Gruppen durch N ersetzt sein können, 1,4-Bicyclo[2.2.2]octylen, Decahydronaphthalin-2,6-diyl oder 1,2,3, 4-Tetrahydronaphthalin-2,6-diyl,

$A^2$ unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo[2.2.2] octylen, unsubstituiertes oder durch CN substituiertes Decahydronapthalin-2,6-diyl oder 1,2,3, 4-Tetrahydronaphthalin-2,6-diyl,

m 0 oder 1, und

$Z^1$ -CO-O-, -O-CO-, $-OCH_2-$, $-CH_2O-$, $-CH_2-CH_2-$, substituiertes Ethylen oder ein Einfachbindung bedeutet, und

stickstoffhaltige Heterocyclen der Formel III

$$R^1\text{-}A^1\text{-}(Z^1\text{-}A^2)_p\text{-}R^2 \qquad \text{III}$$

worin

einer der Reste $R^1$ und $R^2$

H, F, Cl, Br, -CN , -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, -C≡C- und -CH=CH- ersetzt sein können, wobei 2 Heteroatome nicht direkt miteinander verknüpft sind,

der andere Rest $R^1$ oder $R^2$

X′ - Q′ - Y′ - $R^5$ worin X′, Q′, Y′ und $R^5$ die bei Formel I angegebene Bedeutung haben,

$A^1$ $-A^3-Z^2-A-$ oder $-A-Z^2-A^3-$,

A eine 1,4-Phenylengruppe, worin mindestens eine CH-Gruppe durch N ersetzt ist,

$A^3$ unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können,

$A^2$ unsubstituiertes oder durch ein oder zwei F- und/oder Cl-Atome und/oder $CH_3$-Gruppen und/oder CN-Gruppen substituiertes 1,4-Phenylen, worin auch eine öder zwei CH-Gruppen durch N-Atome ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo[2.2.2]octylen, unsubstituiertes oder durch CN substituiertes Decahydronaphthalin-2,6-diyl oder 1,2,3,4-Tetrahydronaphthalin-2,6-diyl,

$Z^1$ und $Z^2$ jeweils unabhängig voneinander -CO-O, -O-CO-, $-OCH_2-$, $-CH_2O-$, $-CH_2CH_2-$, substituiertes Ethylen oder eine Einfachbindung, und

p 0, 1 oder 2

bedeutet, wobei für p = 2 die Gruppen $Z^1$ und $A^2$ gleich oder voneinander verschieden sein können.

Gegenstand der Erfindung sind auch Fluorverbindungen der Formel IV

$$R^1\text{-}(A^1\text{-}Z^1)_m\text{-}A^2\text{-}R^2 \qquad \text{IV}$$

worin

$R^1$ eine Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, $-CCH_3CN-$, -C≡C- und -CH=CH- ersetzt sein können, wobei 2 Heteroatome nicht direkt miteinander verknüpft sind,

$R^2$ X′ - Q′ - Y′ - $R^5$, worin X′, Q′, Y′ und $R^5$ die bei Formel I angegebene ersetzt Bedeutung haben,

$A^1$ 1,4-Cyclohexylen, worin auch eine oder zwei nicht benachbarte $CH_2$-Gruppen durch O-Atome und-/oder S-Atome ersetzt sein können,

$A^2$ unsubstituiertes oder durch ein oder zwei F-Atome substituiertes 1,4-Phenylen,

m 1 oder 2, und

$Z^1$ -CO-O-, -O-CO-, $-OCH_2-$, $-CH_2O-$, $-CH_2-CH_2-$, oder eine Einfachbindung bedeutet,

wobei für m = 2 die Gruppen $A^1$ und $Z^1$ gleich oder voneinander verschieden sein können. Im Falle m = 1 ist hier $A^2$ vorzugsweise durch ein oder zwei F-Atome substituiertes 1,4-Phenylen.

Vor- und nachstehend haben $R^1$, $R^2$, $A^1$, $A^2$, $A^3$, A, $Z^1$, $Z^2$, m und p die bei den Formeln I, II, III und IV angegebene Bedeutung, sofern nicht ausdrücklich etwas anderes angegeben ist.

Die Verbindungen der Formel I umfassen dementsprechend insbesondere Verbindungen der Teilformeln Ia, Ib (mit 1 Ring), Ic (mit 2 Ringen), Id (mit 3 Ringen) und Ie (mit 4 Ringen):

$R^1$-$R^2$ Ia

$R^1$-$A^2$-$R^2$ Ib

$R^1$-$A^1$-$Z^1$-$A^2$-$R^2$ Ic

$R^1$-$A^1$-$Z^1$-$A^1$-$Z^1$-$A^2$-$R^2$ Id

$R^1$-$A^1$-$Z^1$-$A^1$-$Z^1$-$A^1$-$Z^1$-$A^2$-$R^2$ Ie

Besonders bevorzugt sind Verbindungen der Formeln Ic. In den Verbindungen der Formeln Id und Ie können die Gruppen $A^1$ und $Z^1$ gleich oder verschieden sein. Die Gruppen $Z^1$ sind hier vorzugsweise Einfachbindungen. Ferner bevorzugt sind Verbindungen der Formeln Id oder Ie, worin eine der Gruppen $Z^1$-$CH_2CH_2$-, -O-CO- oder -CO-O- und die andere(n) Gruppe(n) $Z^1$ eine Einfachbindung ist (sind).

Die Verbindungen der Formel Ia umfassen solche der bevorzugten Teilformeln Iaa und I ad:

$C_nF_{2n+1}$-$C_mH_{2m+1}$ Iaa

$C_nF_{n+1}COCH_2COC_mH_{2m+1}$ Iad

Darunter sind diejenigen der Teilformel Iaa besonders bevorzugt.

In diesen Teilformeln Iaa und I ad bedeuten n und m jeweils unabhängig voneinander 1-15, vorzugsweise 2-8.

Die Verbindungen der Formel Ic umfassen solche der bevorzugten Teilformeln Ica bis Icd:

$R^1$-Cy-$Z^1$-Cy-$R^2$ Ica

$R^1$-Cy-$Z^1$-Phe-$R^2$ Icb

$R^1$-Phe-$Z^1$-Phe-$R^2$ Icc

$R^1$-Phe-$Z^1$-Pyr-$R^2$ Icd

Darunter sind diejenigigen der Teilformel Icb besonders bevorzugt.

Die Verbindungen der Formel Id umfassen solche der bevorzugten Teilformeln Ida bis Idg:

$R^1$-Phe-$Z^1$-Phe-$Z^1$-Cy-$R^2$ Ida

$R^1$-Pyr-$Z^1$-Phe-$Z^1$-Cy-$R^2$ Idb

$R^1$-Phe-$Z^1$-Pyr-$Z^1$-Cy-$R^2$ Idc

$R^1$-Cy-$Z^1$-Phe-$Z^1$-Phe-$R^2$ Idd

$R^1$-Cy-$Z^1$-Cy-$Z^1$-Phe-$R^2$ Ide

$R^1$-Cy-$Z^1$-Phe-$Z^1$-Cy-$R^2$ Idf

$R^1$-Cy-$Z^1$-Cy-$Z^1$-Cy-$R^2$ Idg

Einer der Reste $R^1$ und $R^2$ ist vorzugsweise Alkyl, Alkoxy, Alkanoyloxy, Alkoxycarbonyl, Oxaalkoxy oder Oxaalkyl mit vorzugsweise 2 bis 12 C-Atomen. Besonders bevorzugt ist Alkyl.

$A^1$ und $A^2$ sind vorzugsweise Cy, Phe oder Pyr. Vorzugsweise enthalten die Verbindungen der Formel I nur eine Gruppe Pyr oder Dio. m ist vorzugsweise 1 oder 2, insbesondere bevorzugt 1.

Die Alkylreste in den Gruppen $R^1$ und/oder $R^2$ können geradkettig oder verzweigt sein. Vorzugsweise sind sie geradkettig, haben 2, 3, 4, 5, 6, 7, 8, 9, 10, 11 oder 12 C-Atome und bedeuten demnach bevorzugt Ethyl, Propyl, Butyl, Pentyl, Hexyl, Heptyl, Octyl, Nonyl, Decyl, Undecyl oder Dodecyl, ferner Methyl, Tridecyl, Tetradecyl oder Pentadecyl.

Falls diese Reste Alkylreste bedeuten, in denen eine ("Alkoxy" bzw. "Oxaalkyl") oder zwei ("Alkoxyalkoxy" bzw. "Dioxaalkyl") $CH_2$-Gruppen durch O-Atome ersetzt sind, so können sie geradkettig oder verzweigt sein. Vorzugsweise sind sie geradkettig, haben 2, 3, 4, 5, 6 oder 7 C-Atome und bedeuten demnach bevorzugt Ethoxy, Propoxy, Butoxy, Pentoxy, Hexoxy, Heptoxy, 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, ferner Methoxy, Octoxy, Nonoxy, Decoxy, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4- oder 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6-, 3,5-, 3,6- oder 4,6-Dioxaheptyl.

Verbindungen der Formeln I sowie der vor- und nachstehenden Teilformeln mit verzweigten Flügelgruppen können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Solche Verbindungen eigen sich auch als Komponenten ferroelektrischer Materialien. Verzweigte Gruppen dieser Art enthalten in der Regel nicht mehr als eine Kettenverzweigung. Bevorzugte verzweigte Reste sind Isopropyl, 2-Butyl (= 1-Methyl-propyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl, 2-Octyloxy.

Einer der beiden Reste $R^1$ und $R^2$ in den Verbindungen der Formeln I, II und III sowie $R^2$ in den Verbin-

dungen der Formel IV hat die Formel

$$-X'-Q'-Y'-R^5$$

worin

X′ -CO-O-, -O-CO-, -O-CO-O-, -CO-, -O-, -S-, -CH=CH-, -CH=CH-COO-, $-CH_2CH_2-$, $-CH_2CH_2-COO-$ oder eine Einfachbindung,

Q′ Alkylen mit 1 bis 5 C-Atomen, worin auch eine nicht mit X′ verknüpfte $CH_2$-Gruppe durch -O-, -CO-, -O-CO-, -CO-O- oder -CH=CH- ersetzt sein kann, oder eine Einfachbindung,

Y′ Perfluoralkylen mit 2 bis 15 C-Atomen, worin auch eine oder mehrere $CF_2$-Gruppen durch -CHF- oder -CF=CF- ersetzt sein können, und

$R^5$ H, F oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können,

bedeutet, mit der Maßgabe, daß die Gruppe der Formel $-X'-Q'-Y'-R^5$ insgesamt nicht mehr als 15 C-Atome und mindestens zwei $CF_2$-Gruppen enthält, und Q′ Alkylen mit 1 bis 5 C-Atomen worin auch eine nicht mit X′ verknüpfte $CH_2$-Gruppe durch --O-, -CO-, -O-CO-, -CO-O-oder - CH=CH - ersetzt sein kann und/oder $R^5$ H oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können, bedeutet.

X′ ist vorzugsweise -O-, -O-CO-, -CO-O-, -CH=CH-(trans), $-CH_2CH_2-$, $-COO-CH_2-$ oder eine Einfachbindung.

Q′ ist vorzugsweise $-CH_2-$ oder eine Einfachbindung. Y′ ist vorzugsweise geradkettiges Perfluoralkylen mit 2 bis 8, insbesondere bevorzugt mit 2 bis 6, C-Atomen. $R^5$ ist vorzugsweise H oder F, insbesondere bevorzugt F.

Besonders bevorzugte Reste $-X'-Q'-Y'-R^5$ sind somit $-CH=CH-R_F$, $-CH_2CH_2-R_F$, $-COO-CH_2-R_F$ und $-OOC-CH_2-R_F$, worin $R_F$ eine vorzugsweise geradkettige Perfluoralkylgruppe ist, worin auch ein F (insbesondere in ω-Position) durch H ersetzt sein kann.

Ganz besonders bevorzugte Reste $-X'-Q'-Y'-R^5$ sind beispielsweise diejenigen der Formeln 3 und 6 - 11:

$-OC_2F_4H$ 3

$-COO-CH_2-CF_2-CHF_2$ 6

$-CH=CH-C_6F_{13}$ 7

$-CH_2CH_2-C_6F_{13}$ 8

$-CH_2CH_2-C_3F_7$ 9

$-CH=CH-COO-CH_2CH_2-C_8F_{17}$ 10

$-CH=CH-COO-CH_2-C_4F_8H$ 11

$A^1$ und $A^2$ sind vorzugsweise Cy, Phe oder Pyr, wobei Phe ggf. auch lateral durch Fluor substituiertes 1,4-Phenylen sein kann. $Z^1$ und $Z^2$ sind vorzugsweise -CO-O-, -O-CO-, $-CH_2CH_2-$ oder Einfachbindungen, insbesondere bevorzugt Einfachbindungen. m ist vorzugsweise 1.

Die Verbindungen der Formel I sind neu (insbesondere diejenigen der Formeln II, III und IV). Alle Verbindungen der Formel I werden nach an sich bekannten Methoden hergestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, daß man sie aus dem Reaktionsgemisch nicht isoliert, sondern sofort weiter zu den Verbindungen der Formel I umsetzt.

Die neuen Verbindungen der Formel II umfassen Verbindungen der Teilformeln IIa, IIb und IIc:

$R^1-A^2-R^2$ IIa

$R^1-A^1-A^2-R^2$ IIb

$R^1-A^1-Z^1-A^2-R^2$ IIc

Darunter sind diejenigen der Teilformeln IIb und IIc, insbesondere IIb, bevorzugt.

Teilformel IIa umfaßt bevorzugte Verbindungen der Formel IIaa bis IIae:

$R^1$-Cy-$R^2$ IIa

$R^1$-Dio-$R^2$ IIab

$R^1$-Phe-$R^2$ IIac

$R^1$-Pyd-$R^2$ IIad

$R^1$-Pyr-$R^2$ IIae

Die Summe der Zahl der C-Atome in beiden Gruppen $R^1$ und $R^2$ beträgt bei Verbindungen der Teilformel IIa vorzugsweise mindestens 8.

Teilformel IIb umfaßt bevorzugte Verbindungen der Formeln IIba bis IIbf:

$R^1$-Cy-Cy-$R^2$ IIba
$R^1$-Cy-Dio-$R^2$ IIbb
$R^1$-Cy-Phe-$R^2$ IIbc
$R^1$-Cy-Pyd-$R^2$ IIbd
$R^1$-Cy-Pyr-$R^2$ IIbe
$R^1$-Dio-Phe-$R^2$ IIbf

Darunter sind diejenigen der Teilformeln IIba und IIbc, insbesondere IIba, besonders bevorzugt.

Teilformel IIc umfaßt bevorzugte Verbindungen der Formeln IIca bis IIcf:

$R^1$-Cy-$Z^1$-Cy-$R^2$ IIca
$R^1$-Cy-$Z^1$-Dio-$R^2$ IIcb
$R^1$-Cy-$Z^1$-Phe-$R^2$ IIcc
$R^1$-Cy-$Z^1$-Pyd-$R^2$ IIcd
$R^1$-Cy-$Z^1$-Pyr-$R^2$ IIce
$R^1$-Dio-$Z^1$-Phe-$R^2$ IIef

Bei den Verbindungen der Teilformel IIc ist $Z^1$ vorzugsweise -CO-O-, -O-CO- oder -$CH_2CH_2$-.

In den Verbindungen der Formeln II ist $A^1$ vorzugsweise unsubstituiertes trans-1,4-Cyclohexylen, 1,4-Bicyclo[2,2,2]-octylen, trans-1,3-Dioxan-2,5-diyl oder trans-Tetrahydropyran-2,5-diyl. Besonders bevorzugt ist trans-1,4-Cyclohexylen. $A^2$ ist vorzugsweise unsubstituiertes 1,4-Phenylen, Pyridin-2,5-diyl, Pyrimidin-2,5-diyl oder trans-1,4-Cyclohexylen. Besonders bevorzugte Bedeutungen von $A^2$ sind trans-1,4-Cyclohexylen und 1,4-Phenylen. $Z^1$ ist vorzugsweise eine Einfachbindung.

Die neuen Verbindungen der Formel III umfassen Verbindungen der Teilformeln IIIa bis IIIe:

$R^1$-$A^3$-$Z^2$-A-$R^2$ IIIa
$R^1$-$A^3$-$Z^2$-A-$Z^1$-$A^2$-$R^2$ IIIb
$R^1$-A-$Z^2$-$A^3$-$Z^1$-$A^2$-$R^2$ IIIc
$R^1$-$A^3$-$Z^2$-A-$Z^1$-$A^2$-$Z^1$-$A^2$-$R^2$ IIId
$R^1$-A-$Z^2$-$A^3$-$Z^1$-$A^2$-$Z^1$-$A^2$-$R^2$ IIIe

Darunter sind diejenigen der Teilformeln IIIa, IIIb und IIIc, insbesondere jedoch IIIa, besonders bevorzugt.

Teilformel IIIa umfaßt bevorzugte Verbindungen der Formeln IIIaa bis IIIac:

$R^1$-Phe-$Z^2$-A-$R^2$ IIIaa
$R^1$-Pyd-$Z^2$-A-$R^2$ IIIab
$R^1$-Pyr-$Z^2$-A-$R^2$ IIIac

Darunter sind diejenigen der Teilformel IIIaa besonders bevorzugt. $Z^2$ bedeutet in den Verbindungen der Teilformel IIIa vorzugsweise -CO-O-, -O-CO-, -$CH_2CH_2$- oder eine Einfachbindung, insbesondere bevorzugt eine Einfachbindung.

Teilformel IIIb umfaßt bevorzugte Verbindungen der Formeln IIIba bis IIIbg:

$R^1$-Phe-$Z^2$-A-$Z^1$-Phe-$R^2$ IIIba
$R^1$-Phe-$Z^2$-A-$Z^1$-Cy-$R^2$ IIIbb
$R^1$-Phe-$Z^2$-A-$Z^1$-Dio-$R^2$ IIIbc
$R^1$-Pyd-$Z^2$-A-$Z^1$-Phe-$R^2$ IIIbd
$R^1$-Pyd-$Z^2$-A-$Z^1$-Cy-$R^2$ IIIbe
$R^1$-Pyr-$Z^2$-A-$Z^1$-Phe-$R^2$ IIIbf
$R^1$-Pyr-$Z^2$-A-$Z^1$-Cy-$R^2$ IIIbg

Darunter sind diejenigen der Teilformeln IIIba und IIIbb besonders bevorzugt.

Teilformel IIIc umfaßt bevorzugte Verbindungen der Formeln IIIca bis IIIcg:

$R^1$-A-$Z^2$-Phe-$Z^1$-Phe-$R^2$ IIIca
$R^1$-A-$Z^2$-Phe-$Z^1$-Cy-$R^2$ IIIcb
$R^1$-A-$Z^2$-Phe-$Z^1$-Dio-$R^2$b IIIcc
$R^1$-A-$Z^2$-Pyd-$Z^1$-Phe-$R^2$ IIIcd
$R^1$-A-$Z^2$-Pyd-$Z^1$-Cy-$R^2$ IIIce
$R^1$-A-$Z^2$-Pyr-$Z^1$-Phe-$R^2$ IIIcf
$R^1$-A-$Z^2$-Pyr-$Z^1$-Cy-$R^2$ IIIcg

Darunter sind diejenigen der Teilformeln IIIca und IIIcb besonders bevorzugt.

In den Verbindungen der Teilformeln IIIb und IIIc ist vorzugsweise mindestens eine der Gruppen $Z^1$ und $Z^2$ eine Einfachbindung und die andere Gruppe $Z^1$ oder $Z^2$ eine Gruppe gewählt aus -CO-O-, -O-CO-, -$CH_2CH_2$- oder Einfachbindung. Besonders bevorzugt sind entsprechende Verbindungen mit $Z^1$=$Z^2$=Einfachbindung.

In den Verbindungen der Formel III ist $A^1$ vorzugsweise -A-$Z^2$-$A^3$-. A ist vorzugsweise Pyridin-2,5-diyl oder Pyrimidin-2,5-diyl. $A^3$ ist vorzugsweise 1,4-Phenylen, Pyridin-2,5-diyl oder Pyrimidin-2,5-diyl, insbesondere

vorzugsweise 1,4-Phenylen. $A^2$ ist vorzugsweise 1,4-Phenylen, trans-1,4-Cyclohexylen, trans-1,3-Dioxan-2,5-diyl oder trans-Tetrahydropyran-2,5-diyl, insbesondere bevorzugt 1,4-Phenylen oder trans 1,4-Cyclohexylen. $Z^1$ und $Z^2$ sind vorzugsweise Einfachbindungen, -CO-O-, -O-CO- oder $-CH_2CH_2-$, vorzugsweise ist höchstens eine Gruppe $Z^1$ und $Z^2$ eine von der Einfachbindung verschiedene Gruppierung. p ist vorzugsweise 0 oder 1, insbesondere bevorzugt 0.

Die neuen Verbindungen der Formel IV umfassen Verbindungen der Teilformeln IVa und IVb (mit zwei Ringen) und IVc bis IVe (mit drei Ringen):

$R^1$-$A^1$-$A^2$-$R^2$ IVa
$R^1$-$A^1$-$Z^1$-$A^2$-$R^2$ IVb
$R^1$-$A^1$-$A^1$-$A^2$-$R^2$ IVc
$R^1$-$A^1$-$Z^1$-$A^1$-$A^2$-$R^2$ IVd
$R^1$-$A^1$-$A^1$-$Z^1$-$A^2$-$R^2$ IVe

Darunter sind diejenigen der Formeln IVb, IVc, IVd und IVe, insbesondere der Formeln IVc und IVe bevorzugt.

Der Einfachheit halber bedeutet PheX vor- und nachstehend ein durch ein oder zwei F-Atome substituiertes 1,4-Phenylen.

Teilformel IVa umfaßt bevorzugte Verbindungen der Formeln IVaa bis IVad:

$R^1$-Cy-PheX-$R^2$ IVaa
$R^1$-Dio-PheX-$R^2$ IVab
$R^1$-Dit-PheX-$R^2$ IVac
$R^1$-Cy-Phe-$R^2$ IVad

Darunter sind diejenigen der Formeln IVaa und IVad besonders bevorzugt.

Teilformel IVb umfaßt bevorzugte Verbindungen der Formeln IVba bis IVbd:

$R^1$-Cy-$Z^1$-PheX-$R^2$ IVba
$R^1$-Dio-$Z^1$-PheX-$R^2$ IVbb
$R^1$-Dit-$Z^1$-PheX-$R^2$ IVbc
$R^1$-Cy-$Z^1$-Phe-$R^2$ IVbd

Darunter sind diejenigen der Formeln IVba und IVbd besonders bevorzugt.

Teilformel IVc umfaßt bevorzugte Verbindungen der Formeln IVca bis IVce:

$R^1$-Cy-Cy-Phe-$R^2$ IVca
$R^1$-Cy-Cy-PheX-$R^2$ IVcb
$R^1$-Dio-Cy-Phe-$R^2$ IVcc
$R^1$-Dit-Cy-Phe-$R^2$ IVcd
$R^1$-$A^1$-Cy-PheX-$R^2$ IVce

Darunter sind diejenigen der Formeln IVca und IVcb besonders bevorzugt.

Teilformel IVd umfaßt bevorzugte Verbindungen der Formeln IVda bis IVdh:

$R^1$-Cy-$Z^1$-Cy-Phe-$R^2$ IVda
$R^1$-Cy-$Z^1$-Cy-PheX-$R^2$ IVdb
$R^1$-$A^1$-$Z^1$-Cy-Phe-$R^2$ IVdc
$R^1$-Cy-$Z^1$-$A^1$-Phe-$R^2$ IVdd
$R^1$-Cy-$Z^1$-$A^1$-PheX-$R^2$ IVde
$R^1$-$A^1$-$Z^1$-Cy-PheX-$R^2$ IVdf
$R^1$-Cy-$CH_2CH_2$-Cy-Phe-$R^2$ IVdg
$R^1$-Cy-$CH_2CH_2$-Cy-PheX-$R^2$ IVdh

Darunter sind diejenigen der Formeln IVda, IVdb, IVdg und IVdh besonders bevorzugt.

Teilformel IVe umfaßt bevorzugte Verbindungen der Formeln IVea bis IVej:

$R^1$-Cy-Cy-$Z^1$-Phe-$R^2$ IVea
$R^1$-Cy-Cy-$Z^1$-PheX-$R^2$ IVeb
$R^1$-$A^1$-Cy-$Z^1$-Phe-$R^2$ IVec
$R^1$-$A^1$-Cy-$Z^1$-PheX-$R^2$ IVed
$R^1$-Cy-$A^1$-$Z^1$-Phe-$R^2$ IVee
$R^1$-Cy-$A^1$-$Z^1$-PheX-$R^2$ IVef
$R^1$-Cy-Cy-$CH_2CH_2$-Phe-$R^2$ IVeg
$R^1$-Cy-Cy-$CH_2CH_2$-PheX-$R^2$ IVeh
$R^1$-Cy-Cy-COO-Phe-$R^2$ IVei
$R^1$-Cy-Cy-COO-PheX-$R^2$ IVej

Darunter sind diejenigen der Formeln IVea, IVeb, IVeg und IVei besonders bevorzugt.

$Z^1$ bedeutet in den Verbindungen der Teilformeln IVb, IVd und IVe vorzugsweise $-CH_2CH_2-$, -COO- oder

-OCO-, ferner bevorzugt eine Einfachbindung.

$A^1$ ist vorzugsweise 1,4-Cyclohexylen und $A^2$ unsubstituiertes oder durch 2 Fluor-Atome in 2,3-Position substituiertes 1,4-Phenylen. m ist 1 oder 2, vorzugsweise 2.

$R^2$ in Formel IV und den entsprechenden Teilformeln bedeutet eine Perfluoralkylgruppe der Formel -X′-Q′-Y′-$R^5$ mit den bereits angegebenen Bedeutungen.

$R^1$ in Formel IV und einer der Reste $R^1$ oder $R^2$ in den Formeln I, II und III bedeuten vorzugsweise Alkyl, Alkoxy, Alkoxycarbonyl oder Oxaalkyl mit vorzugsweise 2-12 C-Atomen. Besonders bevorzugt ist Alkyl.

Die Alkylreste in den Gruppen $R^1$ und/oder $R^2$ können geradkettig oder verzweigt sein. Vorzugsweise sind sie geradkettig, haben, 2,3,4,5,6,7,8,9,10,11 oder 12 C-Atome und bedeuten demnach bevorzugt Ethyl, Propyl, Butyl, Pentyl, Hexyl, Heptyl, Octyl, Nonyl, Decyl, Undecyl oder Dodecyl, ferner Methyl, Tridecyl, Tetradecyl oder Pentadecyl.

Falls $R^1$ und/oder $R^2$ in den Verbindungen der Formeln I, II, III und IV Alkylreste bedeuten, in denen auch beispielsweise eine (Alkoxy bzw. Oxaalkyl) $CH_2$-Gruppe durch ein O-Atom ersetzt sein kann, so können sie geradkettig oder verzweigt sein. Vorzugsweise sind sie geradkettig, haben 2, 3, 4, 5, 6, 7, 8, 9, 10, 11 oder 12 C-Atome und bedeuten demnach bevorzugt Ethyl, Propyl, Butyl, Pentyl, Hexyl, Heptyl, Octyl, Nonyl, Decyl, Undecyl oder Dodecyl, Ethoxy, Propoxy, Butoxy, Pentoxy, Hexoxy, Heptoxy, Octoxy, Nonoxy, Decoxy oder Undecoxy, 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl oder 2-, 3-, 4-, 5-, 6-, 7-, 8- oder 9-Oxadecyl.

Verbindungen der Formeln I, II, III und IV mit verzweigten Flügelgruppen können gelegentlich wegen einer besseren Löslichkeit in den üblichen flüssigkristallinen Basismaterialien von Bedeutung sein, insbesondere als chirale Dotierstoffe, wenn sie optisch aktiv sind. Verzweigte Ketten dieser Art enthalten in der Regel nicht mehr als eine Kettenverzweigung, mehrfache Verzweigung ist jedoch möglich.

Bevorzugte verzweigte Reste $R^1$ und $R^2$ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 2-Octyloxy, 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5-Methylheptyloxycarbonyl, 2-Methylbutyryloxy, 3-Methylvaleryloxy, 4-Methylhexanoyloxy, 2-Chlorpropionyloxy, 2-Chlor-3-methylbutyryloxy, 2-Chlor-4-methylvaleryloxy, 2-Chlor-3-methylvaleryloxy, 2-Methyl-3-oxapentyl.

Falls die Verbindungen der Formeln I, II, III und IV ein asymmetrisches C-Atom enthalten, umfassen diese Formeln Racemate und auch optisch aktive Enantiomere und Enantiomerengemische.

Eine kleinere Gruppe von besonders bevorzugten Verbindungen der Formeln II, III oder IV ist diejenige der folgenden Formeln

Alkyl-Cy-COO-Phe-$CH_2CH_2$-$R_F$ 14

Alkyl-Cy-Cy-$CH_2CH_2$-$R_F$ 15

Alkyl-Cy-Cy-$CH_2CH_2$-Phe-$CH_2CH_2$-$R_F$ 17

Alkyl-Cy-Cy-Phe-$CH_2CH_2$-$R_F$ 18

Alkyl-Pyr-Phe-CH=CH-$COOCH_2$-$R_F$ 34

Alkyl-Cy-Phe-CH=CH-$R_F$ 38

Alkyl-Pyr-Phe-CH=CH-$R_F$ 39

Alkyl-Cy-Phe-$CH_2CH_2$-$R_F$ 40

Alkyl-Pyd-Phe-$CH_2CH_2$-$R_F$ 41

$R_F$ hat dabei die angegebene Bedeutung.

Die neuen Verbindungen der Formeln II, III und IV werden alle nach an sich bekannten Methoden hergestellt, wie sie in der Literatur (z.B. in den Standardwerten wie Houben-Weyl, Methoden der Organischen Chemie, Georg Thieme Verlag, Stuttgart oder in Synthesis of Fluor-organic Compounds, ed. by I.L. Knunyants and G.G. Jakobsen, Springer Verlag, 1985) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

So können Fluorverbindungen der Formeln I, II, III und IV beispielsweise hergestellt werden, indem man entsprechende Hydroxyverbindungen im Autoklaven mit Tetrafluorethen in Gegenwart von Dioxan, Natrium und DMF unter Druck umsetzt.

Weitere Herstellungsmöglichkeiten kann der Fachmann der genannten Literatur oder aus den folgenden Beispielen entnehmen.

Die erfindungsgemäßen flüssigkristallinen Phasen bestehen aus 2 bis 25, vorzugsweise 3 bis 15 Komponenten, darunter mindestens einer Verbindung der Formeln I, II, III oder IV. Die anderen Bestandteile werden vorzugsweise ausgewählt aus den nematischen oder nematogenen Substanzen, insbesondere den bekannten

Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Bis-cyclohexylbenzole, 4,4′-Bis-cyclohexylbiphenyle, Phenyl- oder Cyclohexylpyrimidine, Phenyl- oder Cyclohexyldioxane, Phenyl- oder Cyclohexyl-1,3-dithiane, 1,2-Bis-cyclohexylethane, 1,2-Bis-phenylethane, 1-Phenyl-2-cyclohexylethane, gegebenenfalls halogenierten Stilbene, Benzylphenylether, Tolane und substituierten Zimtsäuren.

Die wichtigsten als Bestandteile derartiger flüssigkristalliner Phasen in Frage kommenden Verbindungen lassen sich durch die Formel V charakterisieren,

R′-L-G-E-R″ V

worin L und E je ein carbo- oder heterocyclisches Ringsystem aus der aus 1,4-disubstituierten Benzol- und Cyclohexanringen, 4,4′-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CY- | -CH=N(O)- |
| | -C≡C- | $-CH_2-CH_2-$ |
| | -CO-O- | $-CH_2-O-$ |
| | -CO-S- | $-CH_2-S-$ |
| | -CH=N- | -COO-Phe-COO- |

oder eine C-C-Einfachbindung, Y Halogen, vorzugsweise Chlor, oder -CN, und R′ und R″ Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

Bei den meisten dieser Verbindungen sind R′ und R″ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältich. Alle dieser Substanzen sind nach literaturbekannten Methoden herstellbar.

Die erfindungsgemäßen Phasen enthalten etwa 0,1 bis 99, vorzugsweise 10 bis 95 %, einer oder mehrerer Verbindungen der Formel I. Weiterhin bevorzugt sind erfindungsgemäße Dielektrika enthaltend 0,1 bis 40, vorzugsweise 0,5 bis 30 %, einer oder mehrerer Verbindungen der Formeln I, II, III und/oder IV.

Verbindungen der Formeln I, II, III und IV mit optisch aktiver Flügelgruppe eignen sich als Komponenten nematischer flüssigkristalliner Phasen zur Vermeidung von reverse twist und zur Verbesserung der elastischen Konstanten.

Ferner sind die optisch aktiven Verbindungen der Formeln I, II, III und IV auch als Komponenten von chiral getilteten smektischen flüssigkristallinen Phasen geeignet.

Diese Phasen enthalten in der achiralen Basismischung neben chiralen Verbindungen der Formeln I, II, III oder IV, mindestens eine andere Komponente mit negativer oder betragsmäßig kleiner positiver dielektrischer Anisotropie.

Als weitere Komponenten mit negativer dielektrischer Anisotropie eignen sich Verbindungen enthaltend das Strukturelement A, B oder C.

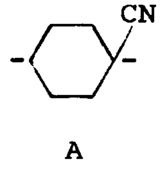

A

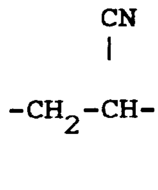

B

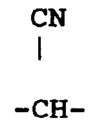

C

Bevorzugte Verbindungen dieser Art entsprechen den Formeln VI a, VI b und VI c:

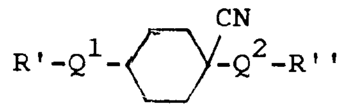

VI a

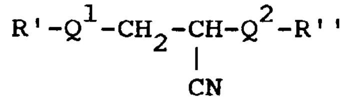

VI b

R′-$Q^3$-$Q^4$-R‴ VI c

R′ und R″ bedeuten jeweils vorzugsweise geradkettige Alkyl- oder Alkoxy-Gruppen mit jeweils 2 bis 10 C-Atomen. $Q^1$ und $Q^2$ bedeuten jeweils 1,4 Phenylen, trans-1,4-Cyclohexylen, 4,4′-Biphenylyl, 4-(trans-4-Cyclohexyl)-phenyl, trans,trans-4,4′-Bicyclohexyl oder eine der Gruppen $Q^1$ und $Q^2$ auch eine Einfachbindung.

$Q^3$ und $Q^4$ bedeuten jeweils 1,4-Phenylen, 4,4′-Biphenylyl oder trans-1,4-Cyclohexylen. Eine der Gruppen $Q^3$ und $Q^4$ kann auch 1,4-Phenylen bedeuten, worin mindestens eine CH-Gruppe durch N ersetzt ist. R‴ ist ein optisch aktiver Rest mit einem asymmetrischen Kohlenstoffatom der Struktur

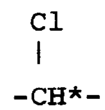 oder 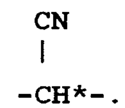.

Besonders bevorzugte Verbindungen der Formel VI c sind diejenigen der Formel VI c′:

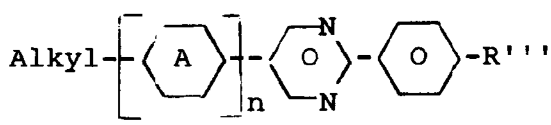

VI c′

worin A 1,4-Phenylen oder trans-1,4-Cyclohexylen und n O oder 1 bedeutet.

Die Herstellung der erfindungsgemäßen Dielektrika erfolgt in an sich üblicher Weise. In der Regel werden die Komponenten ineinander gelöst, zweckmäßig bei erhöhter Temperatur.

Durch geeignete Zusätze können die flüssigkristallinen Dielektrika nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Kronenethern (vgl. z.B. I. Haller et al., Mol.Cryst.Liq.Cryst. Band 24, Seiten 249 - 258 (1973)) zur Verbesserung der Leitfähigkeit, dichroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden. Derartige Substanzen sind z.B. in den DE-OS 22 09 127, 22 40 864, 23 21 632, 23 38 281, 24 50 088, 26 37 430, 28 53 728 und 29 02 177 beschrieben.

Die folgenden Beispiele sollen die Erfindung erläutern, ohne sie zu begrenzen. F. = Schmelzpunkt, K. = Klärpunkt. Vor- und nachstehend bedeuten Prozentangaben Gewichtsprozent; alle Temperaturangaben sind in Grad Celsius angegeben. "Übliche Aufarbeitung" bedeutet: man gibt Wasser hinzu, extrahiert mit Methylenchlorid, trennt ab, trocknet die organische Phase, dampft ein und reinigt das Produkt durch Kristallisation, Destillation und/oder Chromatographie.

Beispiel 1

43,7 g des bekannten 4-(trans-4-Propylcyclohexyl)-phenols werden in 80 ml wasserfreiem Dioxan gelöst und unter trockener Atmosphäre mit 1,2 g Natrium (als 50 %ige Suspension in Xylol) versetzt. Nach 3stgm. Rühren werden 40 ml wasserfreies Dimethylformamid zugesetzt und das Gemisch in einen Autoklaven überführt, der mehrmals mit Stickstoff und dann aus einer Vorratsgasflasche mit Tetrafluorethen gespült wird. Der Druck an Tetrafluorethen wird auf 2,7 bar erhöht, die Zufuhr zur Gasflasche unterbrochen und der Autoklav intensiv geschüttelt. Sobald der Druck auf 2,0 bar gesunken ist, wird erneut auf 2,7 bar angehoben. Dies wird

bis zum Stillstand der Reaktion fortgeführt. Der Inhalt des Autoklaven wird in 500 ml einer 10 %igen Natronlauge eingerührt. Das Gemisch wird mehrmals mit Dichlormethan extrahiert. Die organische Phase wird nach dem Waschen mit Wasser durch Destillation vom Lösungsmittel befreit. Der Rückstand wird einer säulenchromatographischen Trennung (Kieselgel/Toluol) unterzogen. Die Hauptfraktion wird nach der Entfernung des Lösungsmittels am Kugelrohr destilliert. Man erhält 4-(trans-4-Propylcyclohexyl)-1-(1,1,2,2-tetrafluorethoxy)-benzol, F. 6° (K -20°).

Analog werden hergestellt:
4-(trans-4-Methyl-Cyclohexyl-1-(1,1,2,2-tetrafluorethoxy)-benzol
4-(trans-4-Ethyl-Cyclohexyl-1-(1,1,2,2-tetrafluorethoxy)-benzol
4-(trans-4-Butyl-Cyclohexyl-1-(1,1,2,2-tetrafluorethoxy)-benzol
4-(trans-4-Pentyl-Cyclohexyl-1-(1,1,2,2-tetrafluorethoxy)-benzol
4-(trans-4-Hexyl-Cyclohexyl-1-(1,1,2,2-tetrafluorethoxy)-benzol
4-(trans-4-Heptyl-Cyclohexyl-1-(1,1,2,2-tetrafluorethoxy)-benzol
4-(trans-4-Octyl-Cyclohexyl-1-(1,1,2,2-tetrafluorethoxy)-benzol
4-(trans-4-Nonyl-Cyclohexyl-1-(1,1,2,2-tetrafluorethoxy)-benzol
4-(trans-4-Decyl-Cyclohexyl-1-(1,1,2,2-tetrafluorethoxy)-benzol
4-Methyl-1-(1,1,2,2-tetrafluorethoxy)-benzol
4-Ethyl-1-(1,1,2,2-tetrafluorethoxy)-benzol
4-Butyl-1-(1,1,2,2-tetrafluorethoxy)-benzol
4-Pentyl-1-(1,1,2,2-tetrafluorethoxy)-benzol
4-Hexyl-1-(1,1,2,2-tetrafluorethoxy)-benzol
4-Heptyl-1-(1,1,2,2-tetrafluorethoxy)-benzol
4-Octyl-1-(1,1,2,2-tetrafluorethoxy)-benzol
4-Nonyl-1-(1,1,2,2-tetrafluorethoxy)-benzol
4-Decyl-1-(1,1,2,2-tetrafluorethoxy)-benzol

Beispiel 2

Ein Gemisch von 10 g r-1-Cyan-cis-4-(p-bromphenyl)-1-butylcyclohexan, 13 ml Perfluorhexylethylen, 3,5 ml Triethylamin, 50 ml Acetonitril, 0,1 g Pd-II-acetat und 0,25 g Tri-o-tolylphosphin wird 72 h am Rückfluß erhitzt. Nach Abkühlen auf 0° werden die erhaltenen Kristalle abgesaugt, mit Acetonitril und Wasser gewaschen und aus Acetonitril umkristallisiert. Man erhält E-1-Perfluorhexyl-2-[p-(4-cyan-4-butylcyclohexyl)-phenyl]-ethen, F. 117°.

Analog werden hergestellt:
E-1-Perfluorhexyl-2-[p-(trans-4-propylcyclohexyl)-phenyl]-ethen, F. 45°
E-1-Perfluorhexyl-2-[p-(5-propylpyrimidin-2-yl)-phenyl]-ethen, F. 105°, K. 140°
E-1-Perfluorhexyl-2-[p-(5-heptylpyrimidin-2-yl)-phenyl]-ethen, F. 77°, K. 113°

Beispiel 3

Durch Hydrierung von 2,3 g E-1-Perfluorhexyl-2-[p-(4-cyan-4-butylcyclohexyl)-phenyl]-ethen (Beispiel 3) in 50 ml Tetrahydrofuran an 1 g Pd/C (5 %) und Umkristallisation des erhaltenen Rohproduktes aus Ethanol erhält man 1-Perfluorhexyl-2-[p-(4-cyan-4-butylcyclohexyl)-phenyl]-ethan, F. 71°.

Analog werden hergestellt:
1-Perfluorhexyl-2-[p-(trans-4-propylcyclohexyl)-phenyl]-ethan, F. 41°
1-Perfluorhexyl-2-[p-(5-propylpyrimidin-2-yl)-phenyl]-ethan, F. 69°, K. 137°

Beispiel 4

38,7 g des bekannten 4-(5-Heptylpyrimidin-2-yl)-phenols werden in 60 ml wasserfreiem Dioxan gelöst und unter trockener Atmosphäre mit 0,9 g Natrium (als 50 %ige Suspension in Xylol) versetzt. Nach 3stgm. Rühren werden 20 ml wasserfreies Dimethylformamid zugesetzt und das Gemisch in einen Autoklaven überführt, der mehrmals mit Stickstoff und dann aus einer Vorratsgasflasche mit Tetrafluorethen gespült wird. Der Druck an Tetrafluorethen wird auf 2,7 bar erhöht, die Zufuhr zur Gasflasche unterbrochen und der Autoklav intensiv geschüttelt. Sobald der Druck auf 2,0 bar gesunken ist, wird erneut auf 2,7 bar angehoben. Dies wird bis zum Stillstand der Reaktion fortgeführt. Der Inhalt des Autoklaven wird in 500 ml einer 10 %igen Natronlauge eingerührt. Das Gemisch wird mehrmals mit Dichlormethan extrahiert. Die organische Phase wird nach dem Waschen mit Wasser durch Destillation vom Lösungsmittel befreit. Der Rückstand wird einer säulenchromatographischen Trennung (Kieselgel/Dichlormethan) unterzogen. Die Hauptfraktion wird nach der Entfernung des Lösungsmittels aus Ethanol umkristallisiert. Man erhält 4-(5-Heptylpyrimidin-2-yl)-1-(1,1,2,2-tetrafluorethoxy)-benzol, F. 46°, (K. 43°).

Analog werden hergestellt:
4-(5-Ethylpyrimidin-2-yl)-1-(1,1,2,2-tetrafluorethoxy)-benzol
4-(5-Propylpyrimidin-2-yl)-1-(1,1,2,2-tetrafluorethoxy)-benzol
4-(5-Butylpyrimidin-2-yl)-1-(1,1,2,2-tetrafluorethoxy)-benzol
4-(5-Pentylpyrimidin-2-yl)-1-(1,1,2,2-tetrafluorethoxy)-benzol
4-(5-Hexylpyrimidin-2-yl)-1-(1,1,2,2-tetrafluorethoxy)-benzol
4-(5-Octylpyrimidin-2-yl)-1-(1,1,2,2-tetrafluorethoxy)-benzol
4-(5-Nonylpyrimidin-2-yl)-1-(1,1,2,2-tetrafluorethoxy)-benzol
4-(5-Decylpyrimidin-2-yl)-1-(1,1,2,2-tetrafluorethoxy)-benzol

Beispiel 5

Ein flüssigkristallines Dielektrikum bestehend aus
24 % p-(trans-4-Propylcyclohexyl)-benzonitril,
36 % p-(trans-4-Pentylcyclohexyl)-benzonitril,
25 % p-(trans-4-Heptylcyclohexyl)-benzonitril und
15 % 4-Cyan-4'-(trans-4-pentylcyclohexyl)-biphenyl hat bei 20° eine Viskosität von 27 mPa.s. Die Viskositätswerte bei 20° nach Zusatz von jeweils 10 % der erfindungsgemäßen Verbindungen C und D zu obiger Basismischung geht aus folgender Tabelle hervor:

| Zusatz von 10 % der erfindungsgemäßen Verbindung | C | D |
|---|---|---|
| Viskosität in mPa.s bei 20° | 22 | 26 |

C: 4-(trans-4-Propylcyclohexyl)-1-(1,1,2,2-tetrafluorethoxy)-benzol

D: 1-Perfluorhexyl-2-[p-(5-propylpyrimidin-2-yl)-phenyl]-ethan

Beispiel 6

Zu 1,6 frisch bereitetem Natriumethanolat werden unter Ausschluß von Feuchtigkeit als Gemisch 10,0 g des bekannten Ethylpentadecafluoroctanoats und 1,4 g Aceton gegeben und die entstandene Suspension 24 h bei Raumtemperatur gerührt. Dann wird mit 2 n Salzsäure bis zur neutralen Reaktion versetzt. Nach dreimaligem Extrahieren mit je 30 ml Diethylether werden die vereinigten organischen Phasen mit 30 ml Wasser gewaschen. Es wird mit Natriumsulfat getrocknet, das Lösungsmittel abgedampft und der Rückstand bei 30 mmHg im Kugelrohr destilliert. Bei 145-150 °C gehen 7,7 g 5,5,6,6,7,7,8,8,9,9, 10,10,11,11,11-Pentadecafluorundecandion-2,4 über.

Beispiel 7

Man stellt ein flüssigkristallines Dielektrikum her enthaltend
23 % p-trans-4-Propylcyclohexylbenzonitril
34 % p-trans-4-Pentylcyclohexylbenzonitril
24 % p-trans-4-Heptylcyclohexylbenzonitril
14 % 4-Cyan-4'-(trans-4-pentylcyclohexyl)-biphenyl und
5 % 5,5,6,6,7,7,8,8,9,9,10,10,11,11,11-Pentadecafluorundecandion-2,4.

Beispiel 8

Ein Gemisch aus 0,06 mol 1-[trans-4-(trans-4-Propylcyclohexyl)cyclohexyl]-ethen (herstellbar analog

Negishi, Acc. Chem. Res. 15 (1982) 340 durch Kopplung von Vinylbromid mit Di-[trans-4-(trans-4-propyl-cylcohexyl)cyclohexyl)-zink), 0,06 mol 4-(3,3,4,4,5,5,5-heptafluorpentyl)-brombenzol (Herstellung analog R.F. Heck in Org. Reactions, 27 (1982) 345 aus 1,4-Dibrombenzol und 3,3,4,4,5,5,5-Heptafluor-penten-(1) mit anschließender Hydrierung), 0,06 mol Triethylamin, 0,27 g Pd(II)-acetat, 0,74 g Tri-o-tolylphosphin und 75 g Acetonitril wird 120 Stunden am Rückfluß erwärmt.

Nach Eindampfen und Entfernen des wasserlöslichen Hydrobromids wird das Produkt chromatographisch gereinigt und in THF über 1,5 g Pd/C hydriert. Nach Aufarbeitung und Reinigung erhält man 1-[trans-4-(trans-4-Propylcyclohexyl)cyclohexyl]-2-[4-(3,3,4,4,5,5,5-heptafluorpentyl)phenyl]-ethan.

1-[trans-4-(trans-4-Pentylcyclohexyl)cyclohexyl]-2-[4-(3,3,4,4,5,5,5-heptafluorpentyl]-ethan
1-[trans-4-(trans-4-Propylcyclohexyl)cyclohexyl]-2-[4-(3,3,4,4,5,5,6,6,7,7,8,8,8-tridecafluoroctyl]-ethan
1-[trans-4-(trans-4-Pentylcyclohexyl)cyclohexyl]-2-[4-(3,3,4,4,5,5,6,6,7,7,8,8,8-tridecafluoroctyl]-ethan

Beispiel 9

Ein Gemisch aus 0,05 mol Di-[trans-4-(trans-4-propylcyclohexyl)cyclohexyl]-Zink (Darstellung analog Luche in J. Org. Chem. 50 (1985) 5761), 0,4 g Tetrakis(triphenylphosphin)palladium, 0,05 mol 4-(3,3,4,4,5,5,5-Heptafluorpentyl)-brombenzol (vgl. Beispiel 17) und THF wird 24 Stunden bei Raumtemperatur gerührt. Nach Abziehen des Lösungsmittels, Extraktion mit verd. HCl/Toluol und Reinigung des Rohproduktes durch Chromatographie und/oder Umkristallisation erhält man 4-(3,3,4,4,5,5,5-Heptafluorpentyl)-1-[trans-4-(trans-4-propylcyclohexyl)-cyclohexyl]-benzol.

Analog werden hergestellt:

4-(3,3,4,4,5,5,5-Heptafluorpentyl)-1-[trans-4-(trans-4-pentylcyclohexyl)cyclohexyl]-benzol
4-(3,3,4,4,5,5,5-Heptafluorpentyl)-1-[trans-4-(trans-4-butylcyclohexyl)cyclohexyl]-benzol
4-(3,3,4,4,5,5,6,6,7,7,8,8,8-Tridecafluoroctyl)-1-[trans-4-(trans-4-propylcyclohexyl)cyclohexyl]-benzol
4-(3,3,4,4,5,5,6,6,7,7,8,8,8-Tridecafluoroctyl)-1-[trans-4-(trans-4-pentylcyclohexyl)cyclohexyl]-benzol
4-(3,3,4,4,5,5,6,6,7,7,8,8,8-Tridecafluoroctyl)-1-[trans-4-(trans-4-butylcyclohexyl)cyclohexyl]-benzol

Beispiel 10

Zu einem Gemisch aus 0,05 mol Pyridin und 4-(3,3,4,4,5,5,5-Heptafluorpentyl)-phenol (darstellbar über eine Heck-Kopplung von 4-Bromphenylbenzylether mit 3,3,4,4,5,5,5-Heptafluorpenten-(1) und anschließender Hydrierung und Etherspaltung) gibt man 0,05 mol trans-4-Propylcyclohexancarbonsäurechlorid in 10 ml Toluol und rührt 24 Stunden bei Raumtemperatur. Nach Aufarbeitung und Reinigung erhält man 4-(3,3,4,4,5,5,5-Heptafluorpentyl)-phenyl-trans-4-propylcyclohexanoat.

Analog werden hergestellt:

4-(3,3,4,4,5,5,5-Heptafluorpentyl)-phenyl-trans-4-butylcyclohexanoat
4-(3,3,4,4,5,5,5-Heptafluorpentyl)-phenyl-trans-4-pentylcyclohexanoat
4-(3,3,4,4,5,5,5-Heptafluorpentyl)-phenyl-trans-4-heptylcyclohexanoat
4-(3,3,4,4,5,5,6,6,6-Nonafluorhexyl)-phenyl-trans-4-propylcyclohexanoat
4-(3,3,4,4,5,5,6,6,6-Nonafluorhexyl)-phenyl-trans-4-butylcyclohexanoat
4-(3,3,4,4,5,5,6,6,6-Nonafluorhexyl)-phenyl-trans-4-pentylcyclohexanoat
4-(3,3,4,4,5,5,6,6,6-Nonafluorhexyl)-phenyl-trans-4-heptylcyclohexanoat
4-(3,3,4,4,5,5,6,6,7,7,8,8,8-Tridecafluoroctyl)phenyl-trans-4-propyl-cyclohexanoat
4-(3,3,4,4,5,5,6,6,7,7,8,8,8-Tridecafluoroctyl)phenyl-trans-4-butyl-cyclohexanoat
4-(3,3,4,4,5,5,6,6,7,7,8,8,8-Tridecafluoroctyl)phenyl-trans-4-pentyl-cyclohexanoat
4-(3,3,4,4,5,5,6,6,7,7,8,8,8-Tridecafluoroctyl)phenyl-trans-4-heptyl-cyclohexanoat
4-(3,3,4,4,5,5,5-Heptafluorpentyl)phenyl-trans-4-(trans-4-propylcyclohexyl)cyclohexanoat
4-(3,3,4,4,5,5,5-Heptafluorpentyl)phenyl-trans-4-(trans-4-butylcyclohexyl)cyclohexanoat
4-(3,3,4,4,5,5,5-Heptafluorpentyl)phenyl-trans-4-(trans-4-pentylcyclohexyl)cyclohexanoat
4-(3,3,4,4,5,5,5-Heptafluorpentyl)phenyl-trans-4-(trans-4-heptylcyclohexyl)cyclohexanoat
4-(3,3,4,4,5,5,6,6,6-Nonafluorhexyl)phenyl-trans-4-(trans-4-propylcyclohexyl)cyclohexanoat
4-(3,3,4,4,5,5,6,6,6-Nonafluorhexyl)phenyl-trans-4-(trans-4-butylcyclohexyl)cyclohexanoat
4-(3,3,4,4,5,5,6,6,6-Nonafluorhexyl)phenyl-trans-4-(trans-4-pentylcyclohexyl)cyclohexanoat
4-(3,3,4,4,5,5,6,6,6-Nonafluorhexyl)phenyl-trans-4-(trans-4-heptylcyclohexyl)cyclohexanoat
4-(3,3,4,4,5,5,6,6,7,7,8,8,8-Tridecafluoroctyl)phenyl-trans-4-(trans-4-propylcyclohexyl)cyclohexanoat
4-(3,3,4,4,5,5,6,6,7,7,8,8,8-Tridecafluoroctyl)phenyl-trans-4-(trans-4-butylcyclohexyl)cyclohexanoat
4-(3,3,4,4,5,5,6,6,7,7,8,8,8-Tridecafluoroctyl)phenyl-trans-4-(trans-4-pentylcyclohexyl)cyclohexanoat
4-(3,3,4,4,5,5,6,6,7,7,8,8,8-Tridecafluoroctyl)phenyl-trans-4-(trans-4-heptylcyclohexyl)cyclohexanoat

Beispiel 11

Ein Gemisch aus 0,05 mol 1-[trans-4-(trans-4-Propylcyclohexyl)cyclohexyl]-ethen (Herstellung vgl. Beispiel 17), 0,05 mol Hetpafluorpropyliodid, 10 Mol % Tetrakis(triphenylphosphin)palladium und 100 ml Hexan wird analog Beispiel 16 umgesetzt. Das Additionsprodukt wird durch eine chromatographische Aufreinigung isoliert und analog Beispiel 16 reduziert. Nach chromatographischer Reinigung mittels Hexan über Kieselgel erhält man trans-4-(trans-4-Propylcyclohexyl)-1-(3,3,4,4,5,5,5-heptafluorpentyl)cyclohexan.

Analog werden hergestellt:
trans-4-(trans-4-Butylcyclohexyl)-1-(3,3,4,4,5,5,5-heptafluorpentyl)-cyclohexan
trans-4-(trans-4-Pentylcyclohexyl)-1-(3,3,4,4,5,5,5-heptafluorpentyl)-cyclohexan
trans-4-(trans-4-Heptylcyclohexyl)-1-(3,3,4,4,5,5,5-heptafluorpentyl)-cyclohexan
trans-4-(trans-4-Propylcyclohexyl)-1-(3,3,4,4,5,5,6,6,6-nonafluorhexyl)-cyclohexan
trans-4-(trans-4-Butylcyclohexyl)-1-(3,3,4,4,5,5,6,6,6-nonafluorhexyl)-cyclohexan
trans-4-(trans-4-Pentylcyclohexyl)-1-(3,3,4,4,5,5,6,6,6-nonafluorhexyl)-cyclohexan
trans-4-(trans-4-Heptylcyclohexyl)-1-(3,3,4,4,5,5,6,6,6-nonafluorhexyl)-cyclohexan
trans-4-(trans-4-Propylcyclohexyl)-1-(3,3,4,4,5,5,6,6,7,7,8,8,8-tridecafluoroctyl)-cyclohexan
trans-4-(trans-4-Butylcyclohexyl)-1-(3,3,4,4,5,5,6,6,7,7,8,8,8-tridecafluoroctyl)-cyclohexan
trans-4-(trans-4-Pentylcyclohexyl)-1-(3,3,4,4,5,5,6,6,7,7,8,8,8-tridecafluoroctyl)-cyclohexan
trans-4-(trans-4-Heptylcyclohexyl)-1-(3,3,4,4,5,5,6,6,7,7,8,8,8-tridecafluoroctyl)-cyclohexan

Beispiel 12

Ein Gemisch aus 0,03 mol p-(5-Heptyl-pyrimidin-2-yl)-brombenzol, 0,036 g 2,2,3,3-Tetrafluorpropylacrylat, 0,03 mol Triethylamin, 0,14 g Pd-II-acetat, 0,4 g Tri-o-tolylphosphin und 75 ml Acetonitril wird 36 Stunden am Rückfluß erhitzt. Dann wird auf 0° abgekühlt, abfiltriert, das Rohprodukt mit Acetonitril und Wasser gewaschen. Nach Reinigung durch Kristallisation erhält man p-(5-Heptyl-pyrimidin-2-yl)-zimtsäure-(2,2,3,3,tetrafluorpropylester) mit F. 35° und K. 108°.

Analog werden hergestellt:
p-(5-Ethyl-pyrimidin-2-yl)-zimtsäure-(2,2,3,3,-tetrafluorpropylester)
p-(5-Propyl-pyrimidin-2-yl)-zimtsäure-(2,2,3,3,-tetrafluorpropylester)
p-(5-Butyl-pyrimidin-2-yl)-zimtsäure-(2,2,3,3,-tetrafluorpropylester)
p-(5-Pentyl-pyrimidin-2-yl)-zimtsäure-(2,2,3,3,-tetrafluorpropylester)
p-(5-Hexyl-pyrimidin-2-yl)-zimtsäure-(2,2,3,3,-tetrafluorpropylester)
p-(5-Heptyl-pyrimidin-2-yl)-zimtsäure-(1H,1H,5H-octafluorpentylester), F. 84°, K. 117°
p-(5-Ethyl-pyrimidin-2-yl)-zimtsäure-(1H,1H,5H-octafluorpentylester)
p-(5-Propyl-pyrimidin-2-yl)-zimtsäure-(1H,1H,5H-octafluorpentylester)
p-(5-Butyl-pyrimidin-2-yl)-zimtsäure-(1H,1H,5H-octafluorpentylester)
p-(5-Pentyl-pyrimidin-2-yl)-zimtsäure-(1H,1H,5H-octafluorpentylester)
p-(5-Hexyl-pyrimidin-2-yl)-zimtsäure-(1H,1H,5H-octafluorpentylester)
p-(5-Heptyl-pyrimidin-2-yl)-zimtsäure-(1H,1H,2H,2H-heptadecafluordecylester
p-(5-Ethyl-pyrimidin-2-yl)-zimtsäure-(1H,1H,2H,2H-heptadecafluordecylester
p-(5-Propyl-pyrimidin-2-yl)-zimtsäure-(1H,1H,2H,2H-heptadecafluordecylester
p-(5-Butyl-pyrimidin-2-yl)-zimtsäure-(1H,1H,2H,2H-heptadecafluordecylester
p-(5-Pentyl-pyrimidin-2-yl)-zimtsäure-(1H,1H,2H,2H-heptadecafluordecylester
p-(5-Hexyl-pyrimidin-2-yl)-zimtsäure-(1H,1H,2H,2H-heptadecafluordecylester

Beispiel 13

0,01 mol p-(5-Heptyl-pyrimidin-2-yl)-zimtsäure-(2,2,3,3-tetrafluorpropylester (Darstellung siehe Beispiel 21) werden in bekannter Weise in THF mit Pd/C hydriert. Übliche Aufarbeitung liefert β-[p-(5-Heptyl-pyrimidin-2-yl)phenyl]-propionsäure-(2,2,3,3-tetrafluorpropylester) mit F. 42° und K. 54°.

Analog werden hergestellt:
β-[p-(5-Ethyl-pyrimidin-2-yl)phenyl]-propionsäure-(2,2,3,3-tetrafluorpropylester)
β-[p-(5-Propyl-pyrimidin-2-yl)phenyl]-propionsäure-(2,2,3,3-tetrafluorpropylester)
β-[p-(5-Butyl-pyrimidin-2-yl)phenyl]-propionsäure-(2,2,3,3-tetrafluorpropylester)
β-[p-(5-Pentyl-pyrimidin-2-yl)phenyl]-propionsäure-(2,2,3,3-tetrafluorpropylester)
β-[p-(5-Hexyl-pyrimidin-2-yl)phenyl]-propionsäure-(2,2,3,3-tetrafluorpropylester)
β-[p-(Heptyl-pyrimidin-2-yl)phenyl]-propionsäure-(1H,1H,5H-octafluorpentylester)

β-[p-(Ethyl-pyrimidin-2-yl)phenyl]-propionsäure-(1H,1H,5H-octafluorpentylester)
β-[p-(Propyl-pyrimidin-2-yl)phenyl]-propionsäure-(1H,1H,5H-octafluorpentylester)
β-[p-(Butyl-pyrimidin-2-yl)phenyl]-propionsäure-(1H,1H,5H-octafluorpentylester)
β-[p-(Pentyl-pyrimidin-2-yl)phenyl]-propionsäure-(1H,1H,5H-octafluorpentylester)
β-[p-(Hexyl-pyrimidin-2-yl)phenyl]-propionsäure-(1H,1H,5H-octafluorpentylester)
β-[p-(5-Heptyl-pyrimidin-2-yl)phenyl]-propionsäure-(1H,1H,2H,2H-heptadecafluordecylester)
β-[p-(5-Ethyl-pyrimidin-2-yl)phenyl]-propionsäure-(1H,1H,2H,2H-heptadecafluordecylester)
β-[p-(5-Propyl-pyrimidin-2-yl)phenyl]-propionsäure-(1H,1H,2H,2H-heptadecafluordecylester)
β-[p-(5-Butyl-pyrimidin-2-yl)phenyl]-propionsäure-(1H,1H,2H,2H-heptadecafluordecylester)
β-[p-(5-Pentyl-pyrimidin-2-yl)phenyl]-propionsäure-(1H,1H,2H,2H-heptadecafluordecylester)
β-[p-(5-Hexyl-pyrimidin-2-yl)phenyl]-propionsäure-(1H,1H,2H,2H-heptadecafluordecylester)

Beispiel 14

Ein Gemisch aus 0,2 mol trans-4-(trans-4-Propylcyclohexyl)-cyclohexylmethyliodid, 0,2 mol Triphenylphosphin und 250 ml Acetonitril werden 18 Stunden am Rückfluß erhitzt. Nach Verdampfen des Lösungsmittels und Kristallisation des Rückstandes aus Toluol wird das Salz mit 250 ml THF und 0,2 mol Tetrafluorethoxybenzaldehyd versetzt. Bei 0-5 ° gibt man dazu eine Lösung von 0,2 mol Kalium-tert. butylat in 150 ml THF und rührt 1 Stunde bei Raumtemperatur. Anschließend neutralisiert man mit verd. HCl, und filtriert ab, dampft ein und reinigt den Rückstand durch Kristallisation.

Das so erhaltene Olefin wird in THF über Pd/C (5 %) bei Raumtemperatur und Normaldruck hydriert.

Übliche Aufarbeitung und Reinigung durch Kristallisation ergibt 1-[trans-4-(trans-4-Propylcylohexyl)cyclohexyl]-2-(4-tetrafluorethoxyphenyl)-ethan.

Analog werden hergestellt:
1-[trans-4-(trans-4-Butylcyclohexyl)cylohexyl]-2-(4-tetrafluorethoxyphenyl)-ethan
1-[trans-4-(trans-4-Ethylcyclohexyl)cylohexyl]-2-(4-tetrafluorethoxyphenyl)-ethan
1-[trans-4-(trans-4-Pentylcyclohexyl)cylohexyl]-2-(4-tetrafluorethoxyphenyl)-ethan
1-[trans-4-(trans-4-Hexylcyclohexyl)cylohexyl]-2-(4-tetrafluorethoxyphenyl)-ethan
1-[trans-4-(trans-4-Heptylcyclohexyl)cylohexyl]-2-(4-tetrafluorethoxyphenyl)-ethan
1-(trans-4-Propylcyclohexyl)-2-(4-tetrafluorethoxyphenyl)-ethan
1-(trans-4-Butylcyclohexyl)-2-(4-tetrafluorethoxyphenyl)-ethan
1-(trans-4-Ethylcyclohexyl)-2-(4-tetrafluorethoxyphenyl)-ethan
1-(trans-4-Pentylcyclohexyl)-2-(4-tetrafluorethoxyphenyl)-ethan
1-(trans-4-Hexylcyclohexyl)-2-(4-tetrafluorethoxyphenyl)-ethan
1-(trans-4-Heptylcyclohexyl)-2-(4-tetrafluorethoxyphenyl)-ethan

Beispiel 15

Ein Gemisch aus 0,2 mol 4-[trans-4-(trans-4-Propylcyclohexyl)-cyclohexyl]-phenol (herstellbar aus dem entsprechenden Ethylether durch Etherspaltung), 80 ml Dioxan und 0,05 mol Natrium wird bei Raumtemperatur 2,5 Stunden gerührt. Dann werden 40 ml DMF zugesetzt und die Phenolat-lsg. in einem Autoklaven mit Tetrafluorethylen (2,7 bar) unter Rühren auf 50-70 ° erwärmt.
Dieser Prozeß wird bis zur Druckkonstanz wiederholt. Dann wird das Reaktionsgemisch mit Wasser versetzt und wie üblich aufgearbeitet. Nach Reinigung durch Kristallisation erhält man 4-[trans-4-(trans-4-Propylcyclohexyl)cyclohexyl]-tetrafluorethoxybenzol.

Analog werden hergestellt:
4-[trans-4-(trans-4-Ethylcyclohexyl)cyclohexyl]-tetrafluorethoxybenzol
4-[trans-4-(trans-4-Butylcyclohexyl)cyclohexyl]-tetrafluorethoxybenzol
4-[trans-4-(trans-4-Pentylcyclohexyl)cyclohexyl]-tetrafluorethoxybenzol
4-[trans-4-(trans-4-Hexylcyclohexyl)cyclohexyl]-tetrafluorethoxybenzol
4-[trans-4-(trans-4-Heptylcyclohexyl)cyclohexyl]-tetrafluorethoxybenzol

Beispiel 16

Ein Gemisch aus 0,1 mol 4-Tetrafluorethoxybenzaldehyd, 0,12 mol m-Chlorperbenzoesäure und 250 ml $CH_2Cl_2$ wird 48 Stunden bei Raumtemperatur gerührt. Das Reaktionsgemisch wird mit $H_2O$ gewaschen, getrocknet und eingedampft. Der Rückstand wird 2,5 Stunden mit 200 ml ~ 8 %iger NaOH bei Raumtemperatur gerührt. Anschließend wird mit Petrolether gewaschen und angesäuert. Das Phenol wird in $CH_2Cl_2$ aufgenom-

men, die Phase mit Wasser gewaschen, getrocknet und eingedampft.

Dieses Rohprodukt wird mit 0,1 mol trans-4-Pentylcyclohexylcarbonsäurechlorid in 100 ml $CH_2Cl_2$ und unter Eiskühlung mit 0,1 mol Pyridin versetzt. Man rührt noch 6 Stunden bei Raumtemperatur und arbeitet extraktiv auf. Nach Reinigung durch Kristallisation erhält man trans-4-Pentylcyclohexancarbonsäure-(4-tetrafluorethoxyphenylester).

Analog werden hergestellt:

trans-4-Ethylcyclohexancarbonsäure-(4-tetrafluorethoxyphenylester)
trans-4-Butylcyclohexancarbonsäure-(4-tetrafluorethoxyphenylester)
trans-4-Propylcyclohexancarbonsäure-(4-tetrafluorethoxyphenylester)
trans-4-Hexylcyclohexancarbonsäure-(4-tetrafluorethoxyphenylester)
trans-4-Heptylcyclohexancarbonsäure-(4-tetrafluorethoxyphenylester)
trans-4-(trans-4-Pentylcyclohexyl)cyclohexancarbonsäure-(4-tetrafluorethoxyphenylester)
trans-4-(trans-4-Ethylcyclohexyl)cyclohexancarbonsäure-(4-tetrafluorethoxyphenylester)
trans-4-(trans-4-Butylcyclohexyl)cyclohexancarbonsäure-(4-tetrafluorethoxyphenylester)
trans-4-(trans-4-Propylcyclohexyl)cyclohexancarbonsäure-(4-tetrafluorethoxyphenylester)
trans-4-(trans-4-Hexylcyclohexyl)cyclohexancarbonsäure-(4-tetrafluorethoxyphenylester)
trans-4-(trans-4-Heptylcyclohexyl)cyclohexancarbonsäure-(4-tetrafluorethoxyphenylester)

Beispiel 17

Zu einem Gemisch aus 0,05 mol 4-Brom-tetrafluorethoxybenzol und 200 ml Ether gibt man bei -10 - O ° 0,05 mol n-Butyllithium. Anschließend gibt man bei dieser Temperatur 0,05 mol 4-(trans-4-Pentyl-cyclohexylethyl)cyclohexanon (herstellbar durch Umsetzung von Methoxybenzol mit trans-4-Pentylcyclohexylmethylcarbonsäurechlorid in Gegenwart von $AlCl_3$, anschließende Hydrierung mit $H_2$/Pd, Umsetzung mit HBr und erneute Hydrierung mit $H_2$/Raney-Nickel) in 50 ml Ether zu. Man rührt 1 Stunde bei Raumtemperatur, arbeitet extraktiv auf und kocht den erhaltenen Rückstand 2 Stunden mit 1 g p-Toluolsulfonsäure und 200 ml Toluol am Wasserabscheider.

Die so erhaltene Cyclohexenverbindung wird in THF über 1 g Pd/C bei Normaldruck hydriert. Man arbeitet auf und erhält nach Reinigung durch Kristallisation 1-(trans-4-Pentylcyclohexyl)-2-[trans-4-(4-tetrafluorethoxyphenyl)cyclohexyl]-ethan.

Analog werden hergestellt:

1-(trans-4-Ethylcyclohexyl)-2-[trans-4-(4-tetrafluorethoxyphenyl)cyclohexyl]-ethan
1-(trans-4-Propylcyclohexyl)-2-[trans-4-(4-tetrafluorethoxyphenyl)cyclohexyl]-ethan
1-(trans-4-Butylcyclohexyl)-2-[trans-4-(4-tetrafluorethoxyphenyl)cyclohexyl]-ethan
1-(trans-4-Hexylcyclohexyl)-2-[trans-4-(4-tetrafluorethoxyphenyl)cyclohexyl]-ethan
1-(trans-4-Heptylcyclohexyl)-2-[trans-4-(4-tetrafluorethoxyphenyl)cyclohexyl]-ethan

## Patentansprüche

1. Elektrooptisches Flüssigkristallanzeigeelement enthaltend ein Dielektrikum mit mindestens zwei flüssigkristallinen Komponenten, dadurch gekennzeichnet, daß das Dielektrikum zur Verkürzung der Schaltzeiten mindestens eine fluorhaltige Verbindung der Formel I enthält,

$$R^1\text{-}(A^1\text{-}Z^1)_m\text{-}A^2\text{-}R^2 \qquad I$$

worin

einer der Reste $R^1$ und $R^2$

H, F, Cl, Br, -CN , -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, $-CCH_3CN-$, -C≡C- und -CH=CH- ersetzt sein können, wobei 2 Heteroatome nicht direkt miteinander verknüpft sind,

der andere Rest $R^1$ oder $R^2$

$$-X'\text{-}Y'\text{-}R^5$$

worin

X′ -CO-O-, -O-CO, -O-CO-O-, -CO-, -O-, -S-, -CH=CH-, -CH=CH-COO-, $-CH_2CH_2-$, $-CH_2CH_2-COO-$ oder eine Einfachbindung,

Q′ Alkylen mit 1 bis 5 C-Atomen, worin auch eine nicht mit X′ verknüpfte $CH_2$-Gruppe durch -O-, -CO-, -O-CO-, -CO-O- oder -CH=CH- ersetzt sein kann, oder eine Einfachbindung,

Y′ Perfloralkylen mit 2 bis 15 C-Atomen, worin auch eine oder mehrere $CF_2$ -Gruppen durch -CHF- oder

-CF=CF- ersetzt sein können; und

$R^5$ H, F oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können,

bedeutet, mit der Maßgabe, daß die Gruppe der Formel -X′-Q′-Y′-$R^5$ insgesamt nicht mehr als 15 C-Atome und mindestens zwei $CF_2$-Gruppen enthält, und Q′ Alkylen mit 1 bis 5 C-Atomen worin auch eine nicht mit X′ verknüpfte $CH_2$-Gruppe durch --O-, -CO-, -O-CO-, -CO-O-oder - CH=CH - ersetzt sein kann und/oder $R^5$ H oder eine Alkylgruppe mit 1 bis 5 C-Atomen, worin auch eine oder zwei nicht benachbarte $CH_2$-Gruppen durch -O-, -CO-, -O-CO-, -CO-O- und/oder -CH=CH- ersetzt sein können, bedeutet,

$A^1$ und $A^2$ jeweils unabhängig voneinander unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo[2.2.2]octylen, unsubstituiertes oder durch CN substituiertes Decahydronapthalin-2,6-diyl oder 1,2,3,4-Tetrahydronaphthalin-2,6-diyl, $A^2$ auch eine Einfachbindung,

m 0, 1, 2 oder 3, und

$Z^1$ -CO-O, -O-CO-, -$OCH_2$-, -$CH_2O$-, -$CH_2$-$CH_2$-, substituiertes Ethylen oder eine Einfachbindung bedeutet,

wobei für m = 2 oder 3 die Gruppen $A^1$ und $Z^1$ gleich oder voneinander verschieden sein können, mit der Maßgabe, daß im Falle m = 0 die summe der Zahl der C-Atome in beiden Gruppen $R^1$ und $R^2$ mindestens 8 beträgt.

2. Flüssigkristallines Dielektrikum mit mindestens zwei flüssigkristallinen Komponenten, dadurch gekennzeichnet, daß es mindestens eine Verbindung der Formel I nach Anspruch 1 enthält.

3. Verwendung der Verbindungen der Formel I nach Anspruch 1 als Komponenten flüssigkristalliner Dielektrika für elektrooptische Anzeigeelemente.

4. Fluorverbindungen der Formel I nach Anspruch 1, dadurch gekennzeichnet, daß sie der Formel II entsprechen,

$$R^1\text{-}(A^1\text{-}Z^1)_m\text{-}A^2\text{-}R^2 \qquad \text{II}$$

worin

einer der Reste $R^1$ und $R^2$

H, F, Cl, Br, -CN , -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, -$CCH_3CN$-, -C≡C- und -CH=CH- ersetzt sein können, wobei 2 Heteroatome nicht direkt miteinander verknüpft sind,

der andere Rest $R^1$ oder $R^2$

X′ - Y′ - $R^5$, worin X′, Q′, Y′ und $R^5$ die bei Formel I angegebene Bedeutung haben,

$A^1$ unsubstituiertes oder durch ein oder zwei F- und/oder Cl-Atome und/oder $CH_3$-Gruppe und/oder CN-Gruppen substituiertes trans-1,4-Cyclohexylen, worin auch eine oder zwei nicht benachbarte $CH_2$-Gruppen durch O und/oder S oder -CH-Gruppen durch N ersetzt sein können, 1,4-Bicyclo[2.2.2]octylen, Decahydronaphthalin-2,6-diyl oder 1,2,3,4-Tetrahydronapthalin-2,6-diyl,

$A^2$ unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo[2.2.2] octylen, unsubstituiertes oder durch CN substituiertes Decahydronapthalin-2,6-diyl oder 1,2,3, 4-Tetrahydronaphthalin-2,6-diyl,

m 0 oder 1, und

$Z^1$ -CO-O, -O-CO-, -$OCH_2$-, -$CH_2O$-, -$CH_2$-$CH_2$-, substituiertes Ethylen oder eine Einfachbindung bedeutet.

5. Stickstoffhaltige Heterocyclen der Formel I nach Anspruch 1, dadurch gekennzeichnet, daß sie der Formel III entsprechen,

$$R^1\text{-}A^1\text{-}(Z^1\text{-}A^2)_P\text{-}R^2 \qquad \text{III}$$

worin

einer der Reste $R^1$ und $R^2$

H, F, Cl, Br, -CN-, -NCS oder eine unsubstituierte oder substituierte Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, -C≡C- und -CH=CH- ersetzt sein können, wobei 2 Heteroatome nicht direkt miteinander verknüpft sind,

der andere Rest $R^1$ oder $R^2$

X′ - Q′ - Y′ - $R^5$, worin X′, Q′, Y′ und $R^5$ die bei Formel I angegebene Bedeutung haben,

$A^1$ $-A^3-Z^2-A-$ oder $-A-Z^2-A^3-$,

A eine 1,4-Phenylengruppe, worin mindestens eine CH-Gruppe durch N ersetzt ist,

$A^3$ unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können,

$A^2$ unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N-Atome ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo[2.2.2]octylen, unsubstituiertes oder durch CN substituiertes Decahydronaphthalin-2,6-diyl oder 1,2,3,4-Tetrahydronaphthalin-2,6-diyl,

$Z^1$ und $Z^2$ jeweils unabhängig voneinander -CO-O, -O-CO-, $-OCH_2-$, $-CH_2O-$, $-CH_2CH_2-$, substituiertes Ethylen oder eine Einfachbindung, und

p 0, 1 oder 2

bedeutet, wobei für p = 2 die Gruppen $Z^1$ und $A^2$ gleich oder voneinander verschieden sein können.

6. Fluorverbindungen der Formel I nach Anspruch 1, dadurch gekennzeichnet, daß sie der Formel IV entsprechen,

$$R^1-(A^1-Z^1)_m-A^2-R^2 \qquad IV$$

worin

$R^1$ eine Alkylgruppe mit 1 - 15 C-Atomen, worin auch eine oder zwei $CH_2$-Gruppen durch eine Gruppierung aus der Gruppe -O-, -CO-, -O-CO-, -CO-O-, -CH Halogen-, -CHCN-, $-CCH_3CN-$, -C≡C- und -CH=CH- ersetzt sein können, wobei 2 Heteroatome nicht direkt miteinander verknüpft sind,

$R^2$ X′ - Q′ - Y′ - $R^5$, worin X′, Q′, Y′ und $R^5$ die bei Formel I angegebene Bedeutung haben,

$A^1$ 1,4-Cyclohexylen, worin auch eine oder zwei nicht benachbarte $CH_2$-Gruppen durch O-Atome und/oder S-Atome ersetzt sein können,

$A^2$ unsubstituiertes oder durch ein oder zwei F-Atome substituiertes 1,4-Phenylen,

m 1 oder 2, und

$Z^1$ -CO-O, -O-CO-, $-OCH_2-$, $-CH_2O-$, $-CH_2-CH_2-$ oder eine Einfachbindung bedeutet,

wobei für m = 2 die Gruppen $A^1$ und $Z^1$ gleich oder voneinander verschieden sein können.

7. Verbindungen nach mindestens einem der Ansprüche 4 bis 6, dadurch gekennzeichnet, daß einer der Reste $R^1$ und $R^2$ $-OC_2F_4H$, $-CH_2CH_2-C_rF_{2r+1}$ oder $-CH=CH-C_rF_{2r+1}$ mit r = 2-10 bedeutet.

**Claims**

1. Electro-optical liquid crystal display element containing a dielectric with at least two liquid-crystalline components, characterized in that, for shortening the switching times, the dielectric contains at least one fluorine-containing compound of the formula I

$$R^1-(A^1-Z^1)_m-A^2-R^2 \qquad I$$

wherein

one of the radicals $R^1$ and $R^2$ is

H, F, Cl, Br, -CN, -NCS or an unsubstituted or substituted alkyl group having 1 - 15 C atoms, in which one or two $CH_2$ groups can also be replaced by a grouping selected from the group comprising -O-, -CO-, -O-CO-, -CO-O-, -CH-halogen-, -CHCN-, $-CCH_3CN-$, -C≡C- and -CH=CH-, no 2 heteroatoms being directly linked to one another,

the other radical $R^1$ and $R^2$ is

$$-X'-Q'-Y'-R^5$$

wherein

X′ is -CO-O-, -O-CO-, -O-CO-O-, -CO-, -O-, -S-, -CH=CH-, -CH=CH-COO-, $-CH_2CH_2-$, $-CH_2CH_2-COO-$ or a single bond,

Q′ is alkylene having 1 to 5 C atoms, it also being possible for a $CH_2$ group which is not linked to X′ to be replaced by -O-, -CO-, -O- CO-, -CO-O or CH=CH-, or a single bond,

Y′ is perfluoroalkylene having 2 to 15 C atoms, it also being possible for one or more $CF_2$ groups to be replaced by -CHF- or -CF=CF-, and

$R^5$ is H, F or an alkyl group having 1 to 5 C atoms, it also being possible for one or two non-adjacent $CH_2$ groups to be replaced by -O-, -CO-, -O-CO-, -CO-O-, and/or -CH=CH-,

with the proviso that the group of the formula -X′-Q′-Y′$R^5$ does not contain more than 15 C atoms in total and contains not less than two $CF_2$ groups, and Q′ denotes alkylene having 1 to 5 C atoms, it also being possible for a $CH_2$ group which is not linked to X′ to be replaced by -O-, -CO-, -O-CO-, -CO-O- or -CH=CH-, and/or $R^5$

denotes H or an alkyl group having 1 to 5 C atoms, it also being possible for one or two non-adjacent $CH_2$ groups to be replaced by -O-, -CO-, -O-CO-, -CO-O- and/or -CH=CH-,

$A^1$ and $A^2$ independently of one another are each 1,4-phenylene which is unsubstituted or substituted by one or two F and/or Cl atoms and/or $CH_3$ groups and/or CN groups and in which one or two CH groups can also be replaced by N atoms, 1,4-cyclohexylene in which one or two non-adjacent $CH_2$ groups can also be replaced by O atoms and/or S atoms, piperidine-1,4-diyl, 1,4-bicyclo[2.2.2] octylene, unsubstituted or CN-substituted decahydronaphthalene-2,6-diyl or 1,2,3,4-tetrahydronaphthalene-2,6-diyl, and $A^2$ is also a single bond,

m is 0, 1, 2, or 3 and

$Z^1$ is -CO-O-, -O-CO-, $-OCH_2$, $-CH_2O-$, $-CH_2-CH_2-$, substituted ethylene or a single bond,

it being possible for the groups $A^1$ and $Z^1$ to be identical or different in the case of m = 2 or 3, with the proviso that, in the case of m = 0, the sum of the number of C atoms in the two groups $R^1$ and $R^2$ is at least 8.

2. Liquid-crystalline dielectric with at least two liquid-crystalline components, characterized in that it contains at least one compound of the formula I according to Claim 1.

3. Use of compounds of the formula I according to Claim 1 as components of liquid-crystalline dielectrics for electro-optical display elements.

4. Fluorine compounds of the formula I according to Claim 1, characterized in that they correspond to the formula II

$$R^1\text{-}(A^1\text{-}Z^1)_m\text{-}A^2\text{-}R^2 \qquad \text{II}$$

wherein

one of the radicals $R^1$ and $R^2$ is

H, F, Cl, Br, -CN-, -NCS or an unsubstituted or substituted alkyl group having 1 - 15 C atoms, in which one or two $CH_2$ groups can also be replaced by a grouping selected from the group comprising -O-, -CO-, -O-CO-, -CO-O-, -CH- halogen-, -CHCN-, $-CCH_3CN-$, -C≡C- and -C=CH-, no 2 heteroatoms being linked directly to one another,

the other radical $R^1$ or $R^2$ is

X′-Q′-Y-$R^5$, wherein X′, Q′, Y′ and $R^5$ have the meaning given under formula I,

$A^1$ is trans-1,4-cyclohexylene which is unsubstituted or substituted by one or two F and/or Cl atoms and/or $CH_3$ groups and/or CN groups and in which one or two non-adjacent $CH_2$ groups can also be replaced by O and/or S or -CH- groups can be replaced by N, 1,4-bicyclo[2.2.2]octylene, decahydronaphthalene-2,6-diyl or 1,2,3,4-tetrahydronaphthalene-2,6-diyl,

$A^2$ is 1,4-phenylene which is unsubstituted or substituted by one or two F and/or CL atoms and/or $CH_3$ groups and/or CN groups and in which one or two CH groups can also be replaced by N atoms, 1,4-cyclohexylene in which one or two non-adjacent $CH_2$ groups can also be replaced by O atoms and/or S atoms, piperidine-1,4-diyl, 1,4-bicyclo[2.2.2]octylene, unsubstituted or CN-substituted decahydronaphthalene-2,6-diyl, or 1,2,3,4-tetrahydronaphthalene-2,6-diyl,

m is 0 or 1 and

$Z^1$ is -CO-O-, -O-CO-, $-OCH_2-$, $-CH_2O-$, $-CH_2-CH_2-$, substituted ethylene or a single bond.

5. Nitrogen-containing heterocyclic compounds of the formula I according to Claim 1, characterized in that they correspond to the formula III

$$R^1\text{-}A^1\text{-}(Z^1\text{-}A^2)_p\text{-}R^2 \qquad \text{III}$$

wherein

one of the radicals $R^1$ and $R^2$ is

H, F, Cl, Br, -CN-, -NCS or an unsubstituted or substituted alkyl group having 1 - 15 C atoms, in which one or two $CH_2$ groups can also be replaced by a grouping selected from the group comprising -O-, -CO-, -O-CO-, -CO-O-, -CH-halogen-, -CHCN-, -C≡C- and -CH=CH-; no 2 heteroatoms being directly linked to one another,

the other radical $R^1$ or $R^2$ is

X′-Q′-Y′-$R^5$ wherein X′, Q′, Y′ and $R^5$ have the meaning given under formula I,

$A^1$ is $-A^3\text{-}Z^2\text{-}A\text{-}$ or $-A\text{-}Z^2\text{-}A^3\text{-}$,

A is a 1,4-phenylene group in which at least one CH group is replaced by N,

$A^3$ is 1,4-phenylene which is unsubstituted or substituted by one or two F and/or Cl atoms and/or $CH_3$ groups and/or CN groups and in which one or two CH groups can also be replaced by N atoms,

$A^2$ is 1,4-phenylene which is unsubstituted or substituted by one or two F and/or Cl atoms and/or $CH_3$ groups and/or CN groups and in which one or two CH groups can also be replaced by N atoms, 1,4-cyclohexylene in which one or two non-adjacent $CH_2$ groups can also be replaced by O atoms and/or S atoms, piperidine-1,4-diyl, 1,4-bicyclo[2.2.2]octylene, unsubstituted or CN-substituted decahydronaphthalene-2,6-diyl or 1,2,3,4-tetrahydronaphthalene-2,6-diyl,

$Z^1$ and $Z^2$ independently of one another are each -CO-O-, -O-CO-, $-OCH_2-$, $-CH_2O-$, $-CH_2CH_2-$, substi-

tuted ethylene or a single bond and

p is 0, 1 or 2,

it being possible for the groups $Z^1$ and $A^2$ to be identical or different in the case of p = 2.

6. Fluorine compounds of the formula I according to Claim 1, characterized in that they correspond to the formula IV :

$$R^1\text{-}(A^1\text{-}Z^1)_m\text{-}A^2\text{-}R^2 \qquad IV$$

wherein

$R^1$ is an alkyl group having 1 - 15 C atoms, in which one or two $CH_2$ groups can also be replaced by a grouping selected from the group comprising -O-, -CO-, -O-CO-, -CO-O-, -CH-halogen-, -CHCN-, -$CCH_3CN$-, -C≡C- and -CH=CH-, no 2 heteroatoms being directly linked to one another,

$R^2$ is X′-Q′-Y′-$R^5$, wherein X′, Q′, Y′ and $R^5$ have the meaning given under formula I,

$A^1$ is 1,4-cyclohexylene in which one or two non-adjacent $CH_2$ groups can also be replaced by O atoms and/or S atoms,

$A^2$ is 1,4-phenylene which is unsubstituted or substituted by one or two F atoms,

m is 1 or 2 and

$Z^1$ is -CO-O-, -O-CO-, -$OCH_2$-, -$OCH_2O$-, -$CH_2$-$CH_2$- or a single bond,

it being possible for the groups $A^1$ and $Z^1$ to be identical or different in the case of m = 2.

7. Compounds according to at least one of Claims 4 to 6, characterized in that one of the radicals $R^1$ and $R^2$ is -$OC_2F_4H$, -$CH_2CH_2$-$C_rF_{2r}$+1 or -CH=CH-$C_rF_{2r}$+1 with r = 2-10.

## Revendications

1. Elément électro-optique d'affichage à cristaux liquides contenant un diélectrique avec au moins deux composants à cristaux liquides, **caractérisé en ce que** le diélectrique, à des fins de raccourcissement des temps de mise au point, contient au moins un composé fluoritique de formule I,

$$R^1\text{-}(A^1\text{-}Z^1)_m\text{-}A^2\text{-}R^2 \qquad I$$

dans laquelle

un des radicaux $R^1$ et $R^2$ représente

H, F, Cl, Br, -CN, -NCS ou encore un groupe alkyle non substitué ou substitué, contenant de 1 à 15 atomes de carbone, dans lequel également un ou deux groupes $CH_2$ peuvent être remplacés par un groupement choisi parmi le groupe comprenant -O-, -CO-, -O-CO-, -CO-O-, -CH-atome d'halogène, -CHCN-, -$CCH_3CN$-, -C≡C- et -CH=CH-, 2 hétéroatomes n'étant pas liés directement l'un à l'autre,

l'autre radical $R^1$ ou $R^2$ représente

$$\text{-}X'\text{-}Q'\text{-}Y'\text{-}R^5$$

où

X′ représente -CO-O, -O-CO-, -O-CO-O-, -CO-, -O-, -S-, -CH=CH-, -CH=CH-COO-, -$CH_2CH_2$-, -$CH_2CH_2$-COO- ou encore une liaison simple,

Q′ représente un groupe alkylène contenant de 1 à 5 atomes de carbone, dans lequel également un groupe $CH_2$ qui n'est pas relié à X′, peut être remplacé par -O-, -CO-, -O-CO-, -CO-O- ou -CH=CH-, ou encore une liaison simple,

Y′ représente un groupe perfluoroalkylène contenant de 2 à 15 atomes de carbone, dans lequel également un ou plusieurs groupes $CF_2$ peuvent être remplacés par -CHF- ou -CF=CF- et

$R^5$ représente H, F ou un groupe alkyle contenant de 1 à 5 atomes de carbone, dans lequel également un ou deux groupes $CH_2$ qui ne sont pas voisins, peuvent être remplacés par -O-, -CO-, -O-CO-, -CO-O- et/ou -CH=CH-,

à la condition que le groupe de formule -X′-Q′-Y′-$R^5$ ne contienne pas au total plus de 15 atomes de carbone et contienne au moins deux groupes $CF_2$, et Q′ représente un groupe alkylène contenant de 1 à 5 atomes de carbone, dans lequel également un groupe $CH_2$ qui n'est pas relié à X′ peut être remplacé par -O-, -CO-, -O-CO-, -CO-O ou -CH=CH- et/ou $R^5$ représente H ou un groupe alkyle contenant de 1 à 5 atomes de carbone, dans lequel également un ou deux groupes $CH_2$ non voisins peuvent être remplacés par -O-, -CO-, -O-CO-, -CO-O- et/ou -CH=CH-,

$A^1$ et $A^2$ représentent chacun indépendamment l'un de l'autre, un groupe 1,4-phénylène non substitué ou substitué par 1 ou 2 atomes de F et/ou de Cl et/ou groupes $CH_3$ et/ou groupes CN, dans lequel également un ou deux groupes CH peuvent être remplacés par des atomes de N, un groupe 1,4-cyclohexylène dans lequel également un ou deux groupes $CH_2$ non voisins peuvent être remplacés par des atomes de O et/ou des atomes de S, un groupe pipéridine-1,4-diyle, un groupe 1,4-bicyclo[2,2,2] octylène, un groupe décahydronaphtalène-2,6-diyle ou 1,2,3,4-tétrahydronaphtalène-2,6-diyle non substitué ou substitué par CN, $A^2$ représentant égale-

ment une liaison simple,

m est égal à 0, 1, 2 ou 3, et

$Z^1$ représente -CO-O-, -O-CO-, $-OCH_2-$, $CH_2O-$, $-CH_2CH_2-$, un groupe éthylène substitué ou encore une liaison simple,

dans lequel, lorsque m = 2 ou 3, les groupes $A^1$ et $Z^1$ peuvent être identiques ou différents l'un de l'autre, à cette condition que, dans le cas où m = 0, la somme des nombres des atomes de carbone dans les deux groupes $R^1$ et $R^2$ s'élève au moins à 8.

2. Diélectrique à cristaux liquides contenant au moins deux composants à cristaux liquides, caractérisé en ce qu'il contient au moins un composé de formule I selon la revendication 1.

3. Utilisation des composés de formule I selon la revendication 1, comme composants de diélectriques à cristaux liquides destinés à des éléments d'affichage électro-optiques.

4. Composé de fluor de formule I selon la revendication 1, caractérisés en ce qu'ils répondent à la formule II

$$R^1-(A^1-Z^1)_m-A^2-Z^2 \qquad II$$

dans laquelle

un des radicaux $R^1$ et $R^2$ représente

H, F, Cl, Br, -CN, NCS ou encore un groupe alkyle non substitué ou substitué contenant de 1 à 15 atomes de carbone, dans lequel également un ou deux groupes $CH_2$ peuvent remplacés par un groupement choisi parmi le groupe comprenant -O-, -CO-, -O-CO-, -CO-O-, -CH-atome d'halogène-, -CHCN-, $-CCH_3CN-$, -C≡C- et -CH=CH-, 2 hétéroatomes n'étant pas liés directement l'un à l'autre,

l'autre radical $R^1$ ou $R^2$ représente

$-X'-Q'-Y'-R^5$ où X', Q', Y' et $R^5$ ont la signification mentionnée pour la formule I,

$A^1$ représente un groupe trans-1,4-cyclohexylène non substitué ou substitué par un ou deux atomes de F et/ou de Cl et/ou groupes $CH_3$ et/ou groupes CN, dans lequel également un ou deux groupes $CH_2$ non voisins peuvent être remplacés par O et/ou S, ou encore des groupes CH par N, un groupe 1,4-bicyclo[2,2,2]octylène, un groupe décahydronaphtalène-2,6-diyle ou un groupe 1,2,3,4-tétrahydronaphtalène-2,6-diyle,

$A^2$ représente un groupe 1,4-phénylène non substitué ou substitué par un ou deux atomes de F et/ou de Cl et/ou groupes $CH_3$ et/ou groupes CN, dans lequel également un ou deux groupes CH peuvent être remplacés par des atomes de N, un groupe 1,4-cyclohexylène dans lequel également un ou deux groupes $CH_2$ non voisins peuvent être remplacés par des atomes de O et/ou des atomes de S, un groupe pipéridine-1,4-dyile, un groupe 1,4-bicyclo[2,2,2]octylène, un groupe décahydronaphtalène-2,6-diyle ou un groupe 1,2,3,4-tétrahydronaphthalène-2,6-diyle non substitué ou substitué par CN,

m est égal à 0 ou 1, et

$Z^1$ représente -CO-O-, -O-CO-, $-O-CH_2-$, $-CH_2O-$, $-CH_2CH_2-$, un groupe éthylène substitué ou encore une liaison simple.

5. Composés hétérocycliques contenant de l'azote de formule I selon la revendication 1, **caractérisés en ce qu'**ils répondent à la formule III

$$R^1-A^1-(Z^1-A^2)_p-R^2 \qquad III$$

dans laquelle

un des radicaux $R^1$ er $R^2$ représente

H, F, Cl, Br, -CN, NCS ou encore un groupe alkyle non substitué ou substitué contenant de 1 à 15 atomes de carbone, dans lequel également un ou deux groupes $CH_2$ peuvent remplacés par un groupement choisi parmi le groupe comprenant -O-, -CO-, -O-CO-, -CO-O-, -CH-atome d'halogène-, -CHCN-, -C≡C- et -CH=CH-, 2 hétéroatomes n'étant pas liés directement l'un à l'autre,

l'autre radical $R^1$ ou $R^2$ représente

$-X'-Q'-Y'-R^5$ où X', Q', Y' et $R^5$ ont la signification mentionnée dans la formule I,

$A^1$ représente $-A^3-Z^2-A-$ ou $-A-Z^2-A^3-$,

A représente un groupe 1,4-phénylène dans lequel au moins un groupe CH est remplacé par N,

$A^3$ représente un groupe 1,4-phénylène non substitué ou substitué par un ou deux atomes de F et/ou de Cl et/ou $CH_3$ et/ou groupes CN, dans lequel également un ou deux groupes CH peuvent être remplacés par des atomes de N,

$A^2$ représente un groupe 1,4-phénylène non substitué ou substitué par un ou deux atomes de F et/ou de Cl et/ou groupes $CH_3$ et/ou groupes CN, dans lequel également un ou deux groupes CH peuvent être remplacés par des atomes de N, un groupe 1,4-cyclohexylène dans lequel également un ou deux groupes $CH_2$ non voisins peuvent être remplacés par des atomes de O et/ou des atomes de S, un groupe pipéridine-1,4-diyle, un groupe 1,4-bicyclo[2,2,2]octylène, un groupe décahydronaphtalène-2,6-diyle ou un groupe 1,2,3,4-tétrahydronaphtalène-2,6-diyle non substitué ou substitué par CN,

$Z^1$ et $Z^2$ représentent chacun indépendamment l'un de l'autre, -CO-O-, -O-CO-, $-O-CH_2-$, $-CH_2O-$, -

$CH_2CH_2$-, un groupe éthylène substitué ou encore une liaison simple, et

p est égal à 0, 1 ou 2

dans lesquels pour p = 2, les groupes $Z^1$ et $A^2$ peuvent être identiques ou différents l'un de l'autre.

6. Composés de fluor de formule I selon la revendication 1, **caractérisés en ce qu'**ils répondent à la formule IV

$$R^1\text{-}(A^1\text{-}Z^1)_m\text{-}A^2\text{-}R^2 \qquad \text{IV}$$

dans laquelle

$R^1$ représente un groupe alkyle contenant de 1 à 15 atomes de carbone, dans lequel également un ou deux groupes $CH_2$ peuvent être remplacé par un groupement choisi parmi le groupe -O-, -CO-, -O-CO- -CO-O-, -CH-atome d'halogène-, -CHCN-, $-CCH_3CN-$, -C≡C- et -CH=CH-, 2 hétéroatomes n'étant pas liés directement l'un à l'autre,

$R^2$ représente $X'$-$Q'$-$Y'$-$R^5$, où X', Q', Y' et $R^5$ ont la signification mentionnée dans la formule I,

$A^1$ représente un groupe 1,4-cyclohexylène dans lequel également un ou deux groupes $CH_2$ non voisins peuvent être remplacés par des atomes de O et/ou des atomes de S,

$A^2$ représente un groupe 1,4-phénylène non substitué ou substitué par un ou deux atomes de F,

m est égal à 1 ou 2, et

$Z^1$ représente -CO-O-, -O-CO-, $-O-CH_2-$, $-CH_2-O-$, $-CH_2CH_2-$ ou une liaison simple,

dans laquelle, pour m = 2 les groupes $A^1$ et $Z^1$ peuvent être identiques ou différents l'un de l'autre.

7. Composés selon au moins une des revendications 4 à 6, **caractérisés en ce qu'**un des radicaux $R^1$ et $R^2$ représente $-OC_2F_4H$, $-CH_2CH_2-C_rF_{2r+1}$ ou $-CH=CH-C_rF_{2+1}$ avec r = 2-10.